# EUROPEAN PATENT SPECIFICATION

(11) **EP 3 557 716 B1**
(45) Date of publication and mention of the grant of the patent: **16.03.2022**
(21) Application number: 18742164.9
(22) Date of filing: 23.01.2018
(51) Int. Cl.: B60L 53/80, H02J 7/00, H01M 10/42, B60L 50/60

(54) **COMMUNICATION-DURING-DISCHARGE-TYPE PORTABLE MULTI-USE POWER STORAGE DEVICE**
TRAGBARE MEHRZWECK-ENERGIESPEICHERVORRICHTUNG MIT KOMMUNIKATION WÄHREND DER ENTLADUNG
DISPOSITIF DE STOCKAGE D'ÉNERGIE PORTATIF MULTI-USAGE DE TYPE COMMUNICATION PENDANT LA DÉCHARGE

(30) Priority: 23.01.2017 JP 2017009226; 10.08.2017 JP 2017154868
(43) Date of publication of application: 23.10.2019
(73) Proprietor: Yamaha Hatsudoki Kabushiki Kaisha, Iwata-shi, Shizuoka 438-8501 (JP)
(72) Inventor: NAKAMURA, Hitoshi, Iwata-shi Shizuoka 438-8501 (JP); OHNISHI, Noriyuki, Iwata-shi Shizuoka 438-8501 (JP); SAITO, Ryo, Iwata-shi Shizuoka 438-8501 (JP); SHIMIZU, Tsukasa, Iwata-shi Shizuoka 438-8501 (JP)
(74) Representative: Stöckeler, Ferdinand
(86) International application number: PCT/JP2018/001879
(87) International publication number: WO 2018/135663

(56) References cited:
- WO-A1-2013/133555
- JP-A- 2016 046 887
- JP-A- 2016 171 061
- US-A- 5 373 910
- US-A1- 2011 078 092
- US-A1- 2013 026 973
- US-A1- 2013 031 318
- YUN WU ET AL: "A Battery Management System for electric vehicle based on Zigbee and CAN", IMAGE AND SIGNAL PROCESSING (CISP), 2011 4TH INTERNATIONAL CONGRESS ON, IEEE, 15 October 2011 (2011-10-15), pages 2517-2521, XP032071215, DOI: 10.1109/CISP.2011.6100781 ISBN: 978-1-4244-9304-3

## Description

### [Technical Field]

The present invention relates to a communication-during-discharge type portable multi-use power storage device which is portable and usable for plural types of external power consumption devices.

### [Background Art]

A portable power storage device arranged to be attachable and detachable to and from a vehicle is known. This portable power storage device is configured to output stored electric power to the vehicle. The vehicle consumes the electric power output from the portable power storage device. As an example of such a portable power storage device, International Publication No. 2013/016545 discloses a portable electric energy storage device.

The portable electric energy storage device disclosed in this publication includes, for example, a secondary battery, a super capacitor, or an ultracapacitor. For example, the portable electric energy storage device includes a battery cell (power storage device main body), a diagnostic data storage system, and a housing. The diagnostic data storage system is configured to be able to send and receive information wirelessly. When the portable electric energy storage device is attached to the vehicle, the diagnostic data storage system receives diagnostic data sent from the vehicle wirelessly and stores the data. The diagnostic data includes information of a state of the portable electric energy storage device. When the portable electric energy storage device is located in a machine which charges the portable electric energy storage device, the diagnostic data storage system sends stored diagnostic data to this machine. When a mobile device of a user enters the wireless communication range of the diagnostic data storage system, the diagnostic data storage system sends stored diagnostic data to the mobile device wirelessly.

### [Citation List]

### [Patent Literatures]

[Patent Literature 1] International Publication No. 2013/016545

WO 2013/133555 A1 teaches a battery energy storage device for controlling charging and discharging of a cell in a wirelessly controlled manner. The battery energy storage device includes: a cell module receiving a first control signal wirelessly transmitted to individually charge or discharge a cell on the basis of the first control signal; and a battery managing system receiving status information on the cell, which is wirelessly transmitted from the cell module, so as to wirelessly transmit the first control signal generated on the basis of the received status information into the cell module.

### [Summary of Invention]

### [Technical Problem]

The inventors of the subject application tried to find applications of the portable electric energy storage device of the publication above, other than vehicles. As a result of this, it was found that the applications of the portable electric energy storage device of the publication above were limited.

An object of the present invention is to provide a portable multi-use power storage device which is attachable and detachable to and from an external power consuming device consuming electric power and is applicable to various types of external power consuming devices.

### [Solution to Problem]

When a portable power storage device has a power storage device main body with large electrical capacity such as a secondary battery, a super capacitor, and an ultracapacitor, functions of the portable power storage device can be improved by managing the charge (electric power supply) to the power storage device main body, the discharge (electric power release) from the power storage device main body, the amount of electric power stored in the power storage device main body.

With this in mind, the inventors of the subject application studied the applications of the portable power storage device recited in, for example, International Publication No. 2013/016545. As a result, it was found that the functions of the portable power storage device could be improved by changing the management of the power storage device main body in accordance with the application of the portable power storage device. When the management of the power storage device main body is changed in accordance with the application, the power storage device main body of the same type can be used for different applications. It is instead necessary to set the management of the power storage device main body to be suitable for each application. On this account, the applications of the portable power storage device are limited.

Under this circumstance, the inventors of the subject application scrutinized the management of the power storage device main body. As a result, the inventors have found in regard to the management of the power storage device main body that, while the overall specification of the management is different between applications of the portable power storage device, the viewpoint for the management is more or less the same.

Based on this knowledge, the inventors of the subject application found that the versatility regarding the management of the power storage device main body could be improved by applying the following technical idea to the portable power storage device. The technical idea is such that, while the power storage device main body is discharging to an external power consuming device, a management device integrated with the power storage device main body is configured to be able to send information related to the use environment of the power storage device main body in accordance with the external power consuming device to an external communication device wirelessly and to receive information from the external communication device wirelessly. The information from the external communication device includes information generated based on information received by the external communication device. The outside information includes information for managing the power storage device main body. To put it differently, while the power storage device main body is discharging, the portable power storage device is able to acquire, from the external communication device, information for managing the power storage device main body in accordance with the use environment of the power storage device main body. The use environment of the power storage device main body may be different depending on the type of the external power consuming device. With the configuration above, it is unnecessary to change the specification of the power management unit to correspond to each type of the external power consuming device. In other words, the versatility regarding the management of the power storage device main body can be improved. The applications of the portable power storage device can therefore be extended.

In addition to the above, because the external communication device and the portable power storage device communicate with each other, communications between the external power consuming device and the portable power storage device are unnecessary. The external power consuming device may not include communication means, for this reason. The applications of the portable power storage device can therefore be further extended.

In addition to the above, because the power storage device main body transmits information related to the use environment of the power storage device main body to the external communication device wirelessly while the power storage device main body is discharging, the external communication device is able to acquire information of the use environment from each of the portable power storage devices while they are discharging. It is therefore possible to grasp the state and tendency of each of the portable power storage devices. By utilizing the grasped information, for example, the utilization efficiency of the power storage device main body can be improved. The applications of the portable power storage device can therefore be further extended.

Based on the knowledge above, the inventors of the subject application completed a communication-during-discharge type portable multi-use power storage device of the present teaching. The following will describe the present teaching.

(1) The communication-during-discharge type portable multi-use power storage device of the present teaching includes:
   (A) a power storage device main body capable of storing electric power;
   (B) a management device including a power management unit configured to manage the power storage device main body;
   (C) a detachable casing which houses the power storage device main body and the management device and is attachable and detachable to and from an external power consuming device consuming the electric power, in order to allow the power storage device main body and the management device to be integrally attachable and detachable to and from the external power consuming device, the detachable casing having a handle which allows the detachable casing to be hand-carried; and
   (D) a terminal portion which is provided on the detachable casing to be accessible from outside, is electrically connected to the power storage device main body, and allows the electric power to be transmitted between the outside of the detachable casing and the power storage device main body. The detachable casing is attachable and detachable to and from plural types of external power consuming devices. The terminal portion is capable of supplying the electric power stored in the power storage device main body to the external power consuming device attached to the detachable casing, irrespective of the type of the external power consuming device attached to the detachable casing.

In addition to the power management unit, the management device further includes:
(B-1) a monitoring unit configured to monitor discharge from the power storage device main body to the external power consuming device attached to the detachable casing, irrespective of the type of the external power consuming device attached to the detachable casing;
(B-2) a wireless communication unit capable of sending and receiving information wirelessly while the power storage device main body is discharging to the external power consuming device attached to the detachable casing, irrespective of the type of the external power consuming device attached to the detachable casing;
(B-3) a use environment information acquisition unit configured to acquire use environment information related to use environment of the power storage device main body which is discharging to the external power consuming device attached to the detachable casing, the use environment information corresponding to the external power consuming device attached to the detachable casing, irrespective of the type of the external power consuming device attached to the detachable casing; and
(B-4) a communication-during-discharge control unit configured to cause the wireless communication unit to send, wirelessly, at least part of the use environment information acquired by the use environment information acquisition unit to an external communication device which is more distant from the wireless communication unit than the external power consuming device attached to the detachable casing and to obtain outside information which is sent from the external communication device and received by the wireless communication unit wirelessly, while the power storage device main body is discharging to the external power consuming device attached to the detachable casing and the monitoring unit indicates that the power storage device main body is discharging, irrespective of the type of the external power consuming device attached to the detachable casing.

According to this arrangement, the communication-during-discharge type portable multi-use power storage device includes the power storage device main body, the management device, the detachable casing, and the terminal portion. The power storage device main body is configured to be able to store electric power. The detachable casing houses the power storage device main body and the management device. The detachable casing is attachable and detachable to and from plural types of external power consuming devices. The detachable casing causes the power storage device main body and the management device to be integrally attachable and detachable to and from the external power consuming device. The detachable casing has a handle which allows the detachable casing to be hand-carried. It is therefore possible to carry the power storage device main body and the management device together by using the handle. Furthermore, it is possible to attach the power storage device main body and the management device together to each of the external power consuming devices by using the handle. Furthermore, it is possible to detach the power storage device main body and the management device together from the each of external power consuming device by using the handle. The terminal portion is provided on the detachable casing to be accessible from the outside of the detachable casing. The terminal portion is electrically connected to the power storage device main body. The terminal portion is arranged to be able to transmit electric power between the outside of the detachable casing and the power storage device main body. The terminal portion is capable of supplying the electric power stored in the power storage device main body to the external power consuming device attached to the detachable casing, no matter to which one of the external power consuming devices of plural types the detachable casing is attached. The management device includes a power management unit, a monitoring unit, a wireless communication unit, a use environment information acquisition unit, and a communication-during-discharge control unit. The power management unit is configured to manage the power storage device main body. The monitoring unit monitors discharge from the power storage device main body to the external power consuming device attached to the detachable casing, no matter to which one of the external power consuming devices of plural types the detachable casing is attached. The wireless communication unit is able to send and receive information wirelessly while the power storage device main body is discharging to the external power consuming device attached to the detachable casing, no matter to which one of the external power consuming devices of plural types the detachable casing is attached. The use environment information acquisition unit acquires use environment information which is related to the use environment of the power storage device main body discharging to the external power consuming device attached to the detachable casing and corresponds to the external power consuming device attached to the detachable casing, no matter to which one of the external power consuming devices of plural types the detachable casing is attached. No matter to which one of the external power consuming devices of plural types the detachable casing is attached, the communication-during-discharge control unit causes the wireless communication unit to send, wirelessly, at least part of the use environment information acquired by the use environment information acquisition unit to an external communication device which is more distant from the wireless communication unit than the external power consuming device attached to the detachable casing, while the power storage device main body is discharging to the external power consuming device attached to the detachable casing and the monitoring unit indicates that the power storage device main body is discharging. When the monitoring unit indicates that the power storage device main body outputs electric power to the external power consuming device attached to the detachable casing, the power storage device main body is used by the external power consuming device attached to the detachable casing. No matter to which one of the external power consuming devices of plural types the detachable casing is attached, the communication-during-discharge control unit acquires outside information transmitted from the external communication device and received by the wireless communication unit wirelessly, while the power storage device main body is discharging to the external power consuming device attached to the detachable casing and the monitoring unit indicates that the power storage device main body is discharging. The outside information may include information generated based on use environment information received by the external communication device. The outside information may include information for managing the power storage device main body. To put it differently, while the power storage device main body is discharging, the communication-during-discharge type portable multi-use power storage device is able to acquire, from the external communication device, information for managing the power storage device main body in accordance with the use environment information of the power storage device main body corresponding to the external power consuming device. On this account, it is unnecessary to change the specification of the power management unit for each type of the external power consuming device. In other words, the versatility regarding the management of the power storage device main body can be improved. The applications of the communication-during-discharge type portable multi-use power storage device can therefore be extended as compared to known portable power storage devices.

In addition to the above, because the external communication device and the communication-during-discharge type portable multi-use power storage device communicate with each other, communications between the external power consuming device and the communication-during-discharge type portable multi-use power storage device are unnecessary. The external power consuming device may not include communication means, for this reason. The applications of the communication-during-discharge type portable multi-use power storage device can therefore be further extended.

In addition to the above, because the communication-during-discharge type portable multi-use power storage device sends information of use environment of the power storage device main body to the external communication device wirelessly, the external communication device is able to acquire the use environment from each communication-during-discharge type portable multi-use power storage device. It is therefore possible to grasp the state and tendency of each of the communication-during-discharge type portable multi-use power storage devices. By utilizing the grasped information, for example, the utilization efficiency of the power storage device main body can be improved. As a result, the applications of the communication-during-discharge type portable multi-use power storage device can be further extended.

(2) According to an aspect of the present teaching, the communication-during-discharge type portable multi-use power storage device of the present teaching preferably includes the following arrangement.

The outside information includes information for managing the power storage device main body.

(3) According to an aspect of the present teaching, the communication-during-discharge type portable multi-use power storage device of the present teaching preferably includes the following arrangement. The outside information includes information generated based on the use environment information received by the external communication device.

(4) According to an aspect of the present teaching, the communication-during-discharge type portable multi-use power storage device of the present teaching preferably includes the following arrangement.

The wireless communication unit is capable of communicating with the external communication device by using a mobile phone communication system.

With this arrangement, because the communications between the communication-during-discharge type portable multi-use power storage device and the external communication device are performed by a communication system with high convenience, the applications of the communication-during-discharge type portable multi-use power storage device can be further extended.

(5) According to another aspect of the present teaching, the communication-during-discharge type portable multi-use power storage device of the present teaching preferably includes the following arrangement.

The use environment information includes at least one of
information related to a temperature around the power storage device main body,
information related to a moisture around the power storage device main body,
information related to an air pressure around the power storage device main body,
information related to the location of the power storage device main body,
information related to the posture of the power storage device main body,
information related to speed of movement of the power storage device main body,
information related to acceleration of movement of the power storage device main body, or
information related to a pressure received by the power storage device main body.

With this arrangement, when the use environment information includes information related to the temperature around the power storage device main body, the outside information sent from the external communication device may include information related to the management of the power storage device main body in accordance with the temperature of the power storage device main body. When the use environment information includes information related to the moisture around the power storage device main body, the outside information sent from the external communication device may include information related to the management of the power storage device main body in accordance with the moisture of the power storage device main body. When the use environment information includes information related to the air pressure around the power storage device main body, the outside information sent from the external communication device may include information related to the management of the power storage device main body in accordance with the air pressure of the power storage device main body. When the use environment information includes information related to the location of the power storage device main body, the outside information sent from the external communication device may include information related to the management of the power storage device main body in accordance with the location of the power storage device main body. When the use environment information includes information related to the location of the power storage device main body, the outside information sent from the external communication device may include information related to the management of the power storage device main body in accordance with the location of the power storage device main body. When the use environment information includes information related to the location of the power storage device main body, the outside information sent from the external communication device may include information related to the management of the power storage device main body in accordance with the location of the power storage device main body. In any cases, the versatility regarding the management of the power storage device main body is improved when the outside information includes the information described above. As a result, the applications of the communication-during-discharge type portable multi-use power storage device can be further extended.

(6) According to another aspect of the present teaching, the communication-during-discharge type portable multi-use power storage device of the present teaching preferably includes the following arrangement.

The monitoring unit is configured to monitor the discharge from the power storage device main body to the external power consuming device attached to the detachable casing, by monitoring at least one of output of a current from the power storage device main body or an amount of the electric power stored in the power storage device main body, irrespective of the type of the external power consuming device attached to the detachable casing.

(7) According to another aspect of the present teaching, the communication-during-discharge type portable multi-use power storage device of the present teaching preferably includes the following arrangement.

The power management unit is configured to manage the power storage device main body based on a monitoring result of the power storage device main body by the monitoring unit.

With this arrangement, the power management unit manages the power storage device main body based on a monitoring result of the discharge of the power storage device main body. The versatility regarding the management of the power storage device main body is therefore improved. As a result, the applications of the communication-during-discharge type portable multi-use power storage device can be further extended.

(8) According to another aspect of the present teaching, the communication-during-discharge type portable multi-use power storage device of the present teaching preferably includes the following arrangement. the communication-during-discharge control unit is configured to cause the wireless communication unit to send, wirelessly, a monitoring result of the power storage device main body by the monitoring unit to the external communication device while the power storage device main body is discharging to the external power consuming device attached to the detachable casing and the monitoring unit indicates that the power storage device main body is discharging, irrespective of the type of the external power consuming device attached to the detachable casing.

According to this arrangement, the external communication device acquires a monitoring result of the power storage device main body by the monitoring unit in addition to the use environment information of the power storage device main body. The outside information sent from the external communication device to the wireless communication unit may include information generated based on the monitoring result by the monitoring unit and the use environment information. The communication-during-discharge type portable multi-use power storage device is therefore able to acquire, from the external communication device, the information for managing the power storage device main body corresponding to the monitoring result by the monitoring unit and the use environment information, while the power storage device main body is discharging. The versatility regarding the management of the power storage device main body is therefore further improved. The applications of the communication-during-discharge type portable multi-use power storage device can be further extended.

(9) According to another aspect of the present teaching, the communication-during-discharge type portable multi-use power storage device of the present teaching preferably includes the following arrangement, in addition to the arrangement (8) above.

The outside information includes information generated based on the monitoring result of the power storage device main body by the monitoring unit.

(10) According to another aspect of the present teaching, the communication-during-discharge type portable multi-use power storage device of the present teaching preferably includes the following arrangement.

The detachable casing is attachable and detachable to and from a power supply device.

The electric power is supplied from the power supply device to the terminal portion in a state where the detachable casing is attached to the power supply device.

The power storage device main body is able to store the electric power supplied to the terminal portion.

With this arrangement, the communication-during-discharge type portable multi-use power storage device is charged in a state of being detached from the external power consuming device. The communication-during-discharge type portable multi-use power storage device of the present teaching can be used for the external power consuming device having such a charging system. In other words, the applications of the communication-during-discharge type portable multi-use power storage device can be further extended.

(11) According to another aspect of the present teaching, the communication-during-discharge type portable multi-use power storage device of the present teaching preferably includes the following arrangement.

When at least one of the types of the external power consuming devices is attached to the detachable casing, the electric power is supplied from a power source to the terminal portion while the detachable casing is attached to the external power consuming device.

The power storage device main body is able to store the electric power supplied to the terminal portion.

According to this arrangement, the communication-during-discharge type portable multi-use power storage device is chargeable while being attached to the external power consuming device. The communication-during-discharge type portable multi-use power storage device of the present teaching can be used for the external power consuming device having such a charging system. In other words, the applications of the communication-during-discharge type portable multi-use power storage device can be further extended.

(12) According to another aspect of the present teaching, the communication-during-discharge type portable multi-use power storage device of the present teaching preferably includes the following arrangement, in addition to the arrangement (10) or (11) above.

The monitoring unit is configured to monitor the charge of the power storage device main body by the power supply device or the power source by monitoring at least one of input of a current from the power supply device or the power source to the power storage device main body or an amount of the electric power stored in the power storage device main body.

With this arrangement, the power management unit manages the power storage device main body based on a monitoring result of the charge of the power storage device main body. The versatility regarding the management of the power storage device main body is therefore improved. As a result, the applications of the communication-during-discharge type portable multi-use power storage device can be further extended.

### <Definitions of Terms>

In the present teaching, electric power indicates electric energy unless otherwise specified, and is not electric energy per unit time.

In the present teaching, when the detachable casing houses the power storage device main body and the management device, the power storage device main body and the management device may not be exposed to the outside at all, or part of at least one of the power storage device main body or the management device may be exposed to the outside.

In the present teaching, a handle which allows the detachable casing to be hand-carried may be a grip gripped by a hand, a concave into which a finger is inserted, or another type.

The term "portable" in the communication-during-discharge type portable multi-use power storage device of the present teaching indicates that the detachable casing (power storage device) can be carried by a hand by using the handle of the detachable casing. The detachable casing may be carried by a hand in such a way that, for example, the power storage device is suspended, is pushed, or pulled. In other words, when the detachable casing is carried by a hand, the power storage device may be detached from the floor or ground, or may be at least partially in contact with the floor or ground.

The tenn "multi-use" in the communication-during-discharge type portable multi-use power storage device of the present teaching indicates that the power storage device is attachable and detachable to and from plural types of external power consuming devices, and the power storage device is usable for plural types of external power consuming devices.

In the present teaching, the plural types of the external power consuming devices may be plural types of external power consuming devices which are manufactured by the same manufacturer, have the same functions, and are different models (with different product numbers). Having the same functions indicate having the same major functions, and do not indicate that the external power consuming devices have completely identical functions.

In the present teaching, the plural types of the external power consuming devices may be plural types of external power consuming devices which are manufactured by the same manufacturer and have the same functions.

In the present teaching, the plural types of the external power consuming devices may be plural types of external power consuming devices which have different functions.

In the present teaching, a state in which a terminal portion is accessible from the outside indicates a state in which the terminal portion is electrically connectable to the external power consuming device when the detachable casing is attached to the external power consuming device. A state in which a terminal portion is accessible from the outside indicates a state in which the terminal portion is electrically connectable to a power supply device when the detachable casing is attached to the power supply device which is configured to supply electric power to the power storage device main body.

In the present teaching, when the terminal portion is electrically connected to the power storage device main body, the terminal portion may be directly connected to the power storage device main body, or the terminal portion may be connected to the power storage device main body via a conductive member such as a bus bar.

In the present teaching, the sentence that the wireless communication unit is able to send and receive information wirelessly while the power storage device main body is discharging to the external power consuming device does not indicate that the wireless communication unit is able to send and receive information wirelessly only while the power storage device main body is discharging to the external power consuming device. The wireless communication unit may be able to send and receive information wirelessly while the power storage device main body is not discharging to the external power consuming device.

In the present teaching, the use environment of the power storage device indicates the environment in which the power storage device main body is used for the external power consuming device. The state in which the power storage device main body is used for the external power consuming device encompasses a state in which the detachable casing is attached to the external power consuming device. The state in which the power storage device main body is used for the external power consuming device disregards whether the power storage device main body is discharging to the external power consuming device. The state in which the power storage device main body is used for the external power consuming device may encompass a state in which the detachable casing is attached to the power supply device.

In the present teaching, the use environment information related to the use environment of the power storage device main body may include information of the environment around the power storage device main body, may include information of the power storage device main body related to the use environment of the power storage device main body, or may include both of these sets of information. The information of the environment around the power storage device main body is, for example, the temperature, moisture, etc. around the power storage device main body. The information of the power storage device main body related to the use environment is, for example, the location of the power storage device main body, the posture (e.g., inclination) of the power storage device main body, the acceleration of the movement of the power storage device main body, the pressure on the power storage device main body, etc. The use environment information related to the use environment of the power storage device main body may be identification information which is set in advance for each external power consuming device.

In the present teaching, the use environment information does not include information directly related to discharge and charge of the power storage device main body. In the present teaching, the use environment information of the power storage device main body which is discharges to the external power consuming device does not include information directly related to the discharge of the power storage device main body. Examples of the information directly related to the discharge and charge of the power storage device main body includes a current, a voltage, an amount of electric power stored in the power storage device main body, the state of charge (SOC) of the power storage device main body, the internal resistance of the power storage device main body, etc. To put it differently, the information directly related to the discharge and charge of the power storage device main body includes a current, a voltage, and a value calculable based on at least one of a current or a voltage.

In the present teaching, the sentence that the use environment information acquisition unit acquires use environment information may indicate that use environment information sent from a sensor, a processor, etc. of the communication-during-discharge type portable multi-use power storage device is acquired (received) by the use environment information acquisition unit. In the external power consuming device, the sentence that the use environment information acquisition unit acquires use environment information may indicate that use environment information sent from a sensor, a processor, etc, of the external power consuming device is acquired (received) by the use environment information acquisition unit. In the present teaching, the sentence that the use environment information acquisition unit acquires use environment information does not indicate that the use environment information acquisition unit detects or generates use environment information.

In the present teaching, the sentence that the use environment information related to the use environment of the power storage device main body which is discharging to the external power consuming device is acquired does not always indicate that the acquisition is carried out while the power storage device main body is discharging to the external power consuming device. The use environment information may be information related to the use environment of the power storage device main body which is discharging to the external power consuming device.

In the present teaching, when the external communication device is more distant from the wireless communication unit than the external power consuming device, the distance between the external communication device and the wireless communication unit is longer than the distance between the external power consuming device and the wireless communication unit. If the external communication device is more distant from the communication-during-discharge type portable multi-use power storage device than the external power consuming device, the distance between the external communication device and the communication-during-discharge type portable multi-use power storage device is longer than the distance between the external power consuming device and the communication-during-discharge type portable multi-use power storage device.

In the present teaching, at least one of plural options encompasses all conceivable combinations of the options. At least one of plural options may be one of the options, or all of the options.

In the present teaching, at least part of a constituent feature may be part of the constituent feature or the entirety of the constituent feature.

In the claims, when the number of constituent features is not clearly specified and the constituent feature is expressed in a singular form in English, the number of the constituent features may be more than one in the present teaching. In the present teaching, the number of the constituent features may be only one.

In the present teaching, terms "including", "comprising", "having", and derivatives thereof are used to encompass not only listed items and equivalents thereof but also additional items.

In the present teaching, the terms "mounted", "connected", "coupled", and "supported" are used in a broad sense. To be more specific, the terms encompass not only directly mounting, connecting, coupling, and supporting but also indirect mounting, connection, coupling, and supporting. Furthermore, the terms "connected" and "coupled" do not merely indicate physical or mechanical connection and coupling. These terms encompass direct or indirect electric connection and coupling.

Unless otherwise defined, all terms (technical and scientific terms) used in this specification indicate meanings typically understood by a person with ordinary skill in the art in the technical field to which the present teaching belongs. Terms defined in typical dictionaries indicate meanings used in related technologies and in the context of the present disclosure. The terms are not interpreted ideally or excessively formal.

In this specification, the term "preferable" is non-exclusive. The term "preferable" means "preferable but not limited to". In this specification, an arrangement which is "preferable" exerts at least the above-described effects of the arrangement (1) above. In this specification, the term "may" is non-exclusive. The term "may" indicate "may but not must". In this specification, an arrangement which is explained by using the term "may" exerts at least the above-described effects of the arrangement (1) above.

In the present teaching, the preferred arrangements of the different aspects described above may be variously combined. Before an embodiment of the present teaching is detailed, it is informed that the present teaching is not limited to the configurations and layout of elements described below and/or shown in drawings. The present teaching may be implemented as an embodiment other than the below-described embodiment. The present teaching may be implemented as an embodiment other than the below-described embodiment. Furthermore, the present teaching may be implemented by suitably combining below-described modifications.

The invention is set out in the appended set of claims.

### [Advantageous Effects]

According to the present invention, a portable power storage device attachable and detachable to and from an external power consuming device consuming electric power can be used for various types of external power consuming devices.

### [Brief Description of Drawings]

FIG. 1 outlines a communication-during-discharge type portable multi-use power storage device of an embodiment of the present teaching, and shows an example of the use of the communication-during-discharge type portable multi-use power storage device.
FIG. 2 is a schematic block diagram of a communication-during-discharge type portable multi-use power storage device of a specific example of the embodiment of the present teaching.
FIG. 3 is a sequence diagram of processes executed by each of a management device and an external communication device while a power storage device main body is in use.
FIG. 4 is a flow chart of a use environment information acquisition process executed by the management device.
FIG. 5 is a flow chart of a use environment information sending process executed by the management device.
FIG. 6 is a flow chart of a process based on received use environment information, which is executed by the external communication device.
FIG. 7 is a flow chart of a process based on a received instruction, which is executed by the management device.

### [Description of Embodiments]

### <Embodiment of Present Teaching>

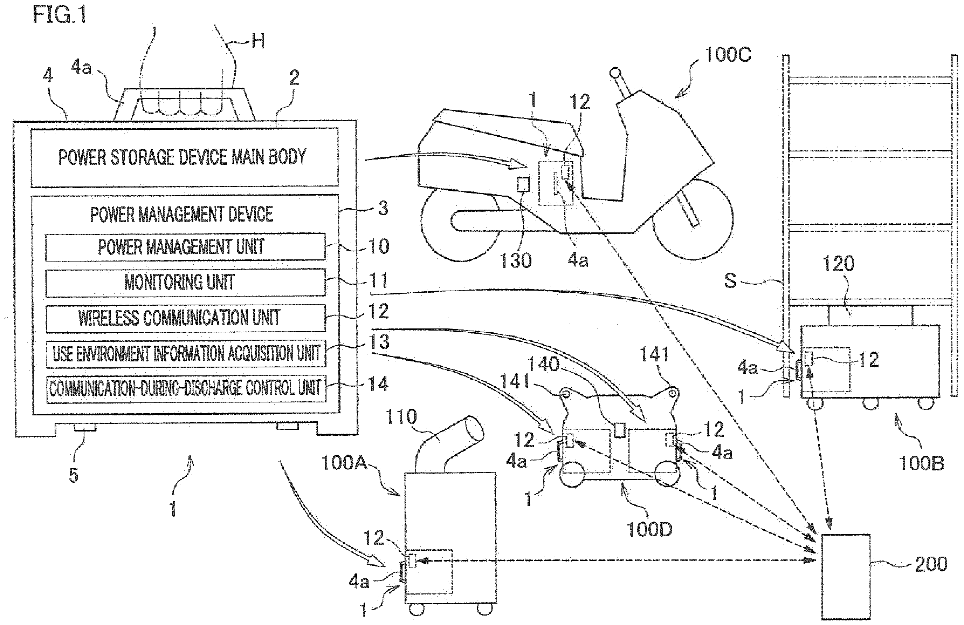

The following will describe an embodiment of the present teaching with reference to FIG. 1. A communication-during-discharge type portable multi-use power storage device 1 of the present embodiment includes a power storage device main body 2, a management device 3, a detachable casing 4, and a terminal portion 5. The power storage device main body 2 is arranged to be able to store electric power. The detachable casing 4 houses the power storage device main body 2 and the management device 3. The detachable casing 4 is attachable and detachable to and from plural types of external power consuming devices 100A, 100B, 100C, and 100D. Hereinafter, the external power consuming devices 100A, 100B, 100C, and 100D will be collectively termed external power consuming devices 100. The specific arrangement of each of the external power consuming devices 100 of the plural types is not limited to the arrangement shown in FIG. 1. FIG. 1 schematically shows the internal structure of the communication-during-discharge type portable multi-use power storage device 1. The ratio in size of the power storage device main body 2 to the management device 3 shown in FIG. 1 is different from the actual ratio. The power storage device main body 2 is larger in size than the management device 3.

The detachable casing 4 causes the power storage device main body 2 and the management device 3 to be integrally attachable and detachable to and from the external power consuming device 100. The detachable casing 4 has a handle 4a by which the detachable casing 4 is carried by a hand H. It is therefore possible to carry the power storage device main body 2 and the management device 3 together by using the handle 4a. Furthermore, it is possible to attach the power storage device main body 2 and the management device 3 together to each of the external power consuming device 100 by using the handle 4a. Furthermore, it is possible to detach the power storage device main body 2 and the management device 3 together from each of the external power consuming device 100 by using the handle 4a.

The terminal portion 5 is provided on the detachable casing 4 to be accessible from the outside of the detachable casing 4. The terminal portion 5 is electrically connected to the power storage device main body 2. The terminal portion 5 is arranged to be able to transmit electric power between the outside of the detachable casing 4 and the power storage device main body 2. The terminal portion 5 is able to supply electric power stored in the power storage device main body 2 to the external power consuming device 100 attached to the detachable casing 4, irrespective of the type of the external power consuming device 100 attached to the detachable casing 4.

The management device 3 includes a power management unit 10, a monitoring unit 11, a wireless communication unit 12, a use environment information acquisition unit 13, and a communication-during-discharge control unit 14. The power management unit 10 is configured to manage the power storage device main body 2. The monitoring unit 11 monitors discharge from the power storage device main body 2 to the external power consuming device 100 attached to the detachable casing 4 no matter to which one of the external power consuming devices 100 of plural types the detachable casing 4 is attached. The wireless communication unit 12 is able to send and receive information wirelessly while the power storage device main body 2 is discharging to the external power consuming device 100 attached to the detachable casing 4, no matter to which one of the external power consuming devices 100 of plural types the detachable casing 4 is attached. The use environment information acquisition unit 13 acquires use environment information which is related to the use environment of the power storage device main body 2 discharging to the external power consuming device 100 attached to the detachable casing 4 and corresponds to the external power consuming device 100 attached to the detachable casing 4, no matter to which one of the external power consuming devices 100 of plural types the detachable casing 4 is attached. No matter to which one of the external power consuming devices 100 of plural types the detachable casing 4 is attached, the communication-during-discharge control unit 14 causes the wireless communication unit 12 to send, wirelessly, at least part of the use environment information acquired by the use environment information acquisition unit 13 to an external communication device 200 which is more distant from the wireless communication unit 12 than the external power consuming device 100 attached to the detachable casing 4, while the power storage device main body 2 is discharging to the external power consuming device 100 attached to the detachable casing 4 and the monitoring unit 11 indicates that the power storage device main body 2 is discharging. When the monitoring unit 11 indicates that the power storage device main body 2 outputs electric power to the external power consuming device 100 attached to the detachable casing 4, the power storage device main body 2 is used by the external power consuming device 100. No matter to which one of the external power consuming devices 100 of plural types the detachable casing 4 is attached, the communication-during-discharge control unit 14 acquires outside information transmitted from the external communication device 200 and received by the wireless communication unit 12 wirelessly, while the power storage device main body 2 is discharging to the external power consuming device 100 attached to the detachable casing 4 and the monitoring unit 11 indicates that the power storage device main body 2 is discharging. The outside information may include information generated based on use environment information received by the external communication device 200. The outside information may include information for managing the power storage device main body 2. To put it differently, while the power storage device main body 2 is discharging, the communication-during-discharge type portable multi-use power storage device 1 is able acquire, from the external communication device 200, information for managing the power storage device main body 2 in accordance with the use environment information of the power storage device main body 2 corresponding to the external power consuming device 100. On this account, it is unnecessary to change the specification of the power management unit 10 for each type of the external power consuming device 100. In other words, the versatility regarding the management of the power storage device main body 2 can be improved. The applications of the communication-during-discharge type portable multi-use power storage device 1 can therefore be extended as compared to known portable power storage devices.

In addition to the above, because the external communication device 200 and the communication-during-discharge type portable multi-use power storage device 1 communicate with each other, communications between the external power consuming device 100 and the communication-during-discharge type portable multi-use power storage device 1 are unnecessary. The external power consuming device 100 may not include communication means, for this reason. The applications of the communication-during-discharge type portable multi-use power storage device 1 can therefore be further extended.

In addition to the above, because the communication-during-discharge type portable multi-use power storage device 1 sends information of use environment of the power storage device main body 2 to the external communication device 200 wirelessly, the external communication device 200 is able to acquire the use environment from each communication-during-discharge type portable multi-use power storage device 1. It is therefore possible to grasp the state and tendency of each of the communication-during-discharge type portable multi-use power storage devices 1. By utilizing the grasped information, for example, the utilization efficiency of the power storage device main body 2 can be improved. As a result, the applications of the communication-during-discharge type portable multi-use power storage device 1 can be further extended.

### <Specific Example 1 of Embodiment of Present Teaching>

Specific Example 1 of the embodiment of the present teaching will be described with reference to FIG. 1 to FIG. 7. Basically, Specific Example 1 of the embodiment of the present teaching encompasses all features of the embodiment of the present teaching described above. Members identical with those in the above-described embodiment of the present teaching are not explained again. The following will describe arrangements which are different from those of the above-described embodiments of the present teaching.

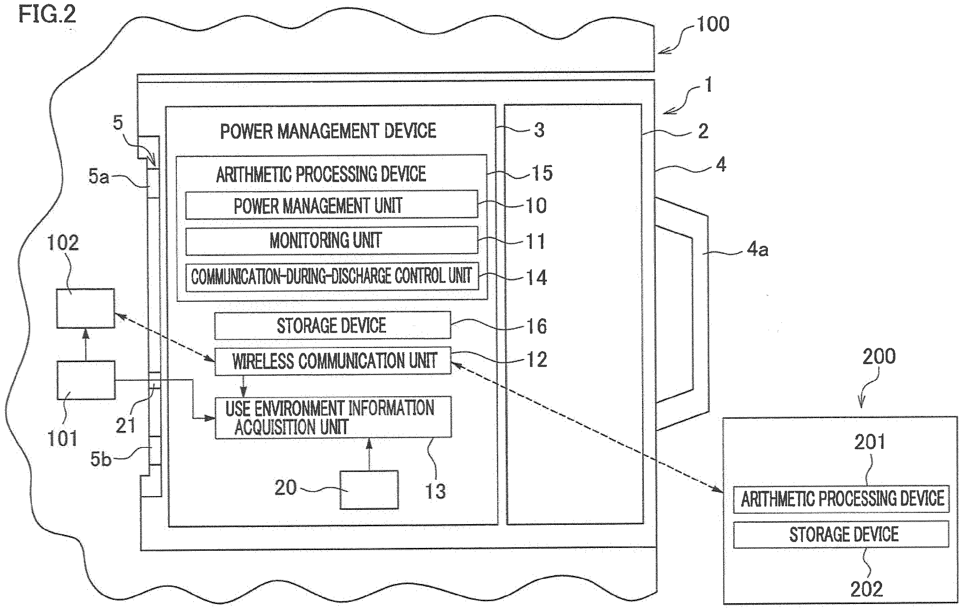

FIG. 1 shows an example in which the communication-during-discharge type portable multi-use power storage device 1 is used for four external power consuming devices 100A, 100B, 100C, and 100D. The communication-during-discharge type portable multi-use power storage device 1 is arranged to be attachable and detachable to and from plural types of external power consuming devices 100 (see FIG. 2). The external power consuming devices 100 are any types of devices as long as they consume electric power. The external power consuming devices 100 are devices which are driven by supplied electric power. The communication-during-discharge type portable multi-use power storage device 1 discharges to (supplies electric power to) the external power consuming device 100 no matter to which one of the external power consuming devices 100 of plural types the apparatus 1 is attached.

The external power consuming devices 100 may be consumer apparatuses or industrial apparatuses. The consumer apparatuses are used by general consumers or used in home, whereas the industrial apparatuses are used in industrial fields. A consumer apparatus is, for example, a home electric appliance. Examples of the home electric appliance include an air conditioner, a refrigerator, a washing machine, a dryer, a television, and a gaming machine, etc. Examples of the industrial apparatus include a construction machine, a civil engineering machine, an electric tool (e.g., a welding device), a transporting machine (e.g., carriage) used in a warehouse or a factory, a portable air conditioner (e.g., a spot cooler or a spot heater), an inboard machine (e.g., a fish finder and a wireless communications apparatus), a broadcasting device (e.g., a data storage, a broadcasting device used for relay broadcasting, or emergency broadcasting equipment), an audio device (e.g., a power amplifier), an emergency device (e.g., a cooking device or a water purifier), an amusement device for an amusement facility, etc.

The external power consuming device 100A shown in FIG. 1 is an example of a spot cooler. The spot cooler is provided in a factory, etc. The spot cooler 100A includes a blowing pipe 110 through which cool air (cool wind) is blown out. The spot cooler 100A has wheels to facilitate a user to manually move the spot cooler 100A.

The external power consuming device 100B shown in FIG. 1 is an example of a rack transporter used in a warehouse or a factory. The rack transporter 100B is a device for transporting a rack S (indicated by two-dot chain lines in FIG. 2) on which an object is placed. The rack transporter 100B is configured to be able to run on the floor. The rack transporter 100B is configured to be able to automatically run based on information received wirelessly. The rack transporter 100B includes a rack supporter 120 which is movable in the up-down direction. With the lowered rack supporter 120, the rack transporter 100B runs to a space under the lowest shelf of the rack S (indicated by two-dot chain lines in FIG. 2). As the rack supporter 120 moves up in this state, the rack S is moved up. As the rack transporter 100B runs in this state, the rack S is transported.

The external power consuming device 100 may be an electric vehicle (electric mobile body). The electric vehicle may be a consumer apparatus or an industrial apparatus. The electric vehicle may have a motor as the only power source, or may have a motor and an internal combustion engine as power sources. The electric vehicle may be manned or unmanned. A manned electric vehicle may be driven by a driver or may be automatically driven. The electric vehicle may be able to run on any route or may be able to run only on a predetermined route.

The electric vehicle may run on the land, on the water, in the water, or in the air. The electric vehicle running on the land is, for example, a four-wheeled vehicle, a bicycle, a tricycle, or a snowmobile, etc. The electric vehicle running on the land may be a vehicle having more than four wheels. The four-wheeled vehicle is, for example, a passenger vehicle, an ATV (All Terrain Vehicle), an ROV (Recreational Off-highway Vehicle), a golf cart, or a forklift, etc. The electric vehicle running on the water is, for example, a ship or a personal water craft, etc. The electric vehicle running in the water is, for example, a submarine, etc. The electric vehicle running in the air is, for example, an airplane, a helicopter, or a drone, etc. The external power consuming device 100C shown in FIG. 1 is an example of a motorcycle (to be more specific, a scooter). In a state that the detachable casing 4 is attached to the motorcycle 100C, the detachable casing 4 is entirely covered with a vehicle body cover or a seat of the motorcycle 100C. The motorcycle 100C may be arranged so that the detachable casing 4 is partially exposed to the outside.

The external power consuming device 100 may be a typical external power consuming device which receives electric power from an engine generator. A known engine generator has various output voltages and generation capacities, but its operation voltage or generation capacity is relatively high or large.

The external power consuming device 100 may be a distribution device. The external power consuming device 100D shown in FIG. 1 is an example of the distribution device. The distribution device includes a power output unit to which at least one plug is insertable. In the case of the distribution device 100D shown in FIG. 1, the reference symbol 140 indicates the power output unit. Each of the at least one plug may be an electric plug. Each of the at least one plug may be an USB plug. The at least one plug may include both an electric plug and an USB plug. The at least one plug may include a plug which is different from these two types of the plugs. The distribution device may include an AC/DC converter configured to convert DC to AC. The distribution device may include an electrical transformer configured to change the voltage. The distribution device is used in order to supply electric power of the communication-during-discharge type portable multi-use power storage device 1 to an electric apparatus which is not attachable and detachable to and from the communication-during-discharge type portable multi-use power storage device 1. With the distribution device, it is possible to supply electric power of the communication-during-discharge type portable multi-use power storage device 1 to electric apparatus whose operating voltage is lower than the output voltage of the communication-during-discharge type portable multi-use power storage device 1.

The distribution device 100D shown in FIG. 1 has two handles 141 which can be gripped by hands. The distribution device 100D is therefore easily carried in a state that the communication-during-discharge type portable multi-use power storage device 1 is attached to the distribution device 100D. The distribution device may not have such handles. Because the distribution device alone is relatively light in weight, the distribution device alone is easily carried. The distribution device 100D shown in FIG. 1 has wheels to facilitate a user to manually move the distribution device 100D easily. The distribution device may not have such wheels.

External power consuming devices 100 of plural types, for which one communication-during-discharge type portable multi-use power storage device 1 can be used, may have different functions. For example, the external power consuming devices 100 of plural types may include both an industrial apparatus and a consumer apparatus. External power consuming devices 100 of plural types, for which one communication-during-discharge type portable multi-use power storage device 1 can be used, may be manufactured by different manufacturers but have the same function. External power consuming devices 100 of plural types, for which one communication-during-discharge type portable multi-use power storage device 1 can be used, may be manufactured by the same manufacturer, have the same function, and be different models (with different product numbers).

When not attached to the external power consuming device 100, the communication-during-discharge type portable multi-use power storage device 1 is attachable to a power supply device (not illustrated). In other words, the detachable casing 4 is attachable and detachable to and from the power supply device (charging device). The power supply device is configured to supply electric power to the communication-during-discharge type portable multi-use power storage device 1. Charge of the communication-during-discharge type portable multi-use power storage device 1 may start when the communication-during-discharge type portable multi-use power storage device 1 is attached to the power supply device.

The communication-during-discharge type portable multi-use power storage device 1 may be able to receive electric power supplied from a power source (not illustrated) via the external power consuming device 100 while being attached to the external power consuming device 100. Charge of the communication-during-discharge type portable multi-use power storage device 1 may start when the power source is connected to the external power consuming device 100 or the external power consuming device 100 is operated to start charging. In the specific example of the present embodiment, whether charge of the communication-during-discharge type portable multi-use power storage device 1 while being attached to the external power consuming device 100 is possible depends on the structure of the external power consuming device 100. All of the external power consuming devices 100 of plural types, for which one communication-during-discharge type portable multi-use power storage device 1 can be used, may allow such charging. In other words, charge of the communication-during-discharge type portable multi-use power storage device 1 by the power source may be possible no matter to which one of the external power consuming devices 100 of plural types the detachable casing 4 is attached. Among the external power consuming devices 100 of plural types, for which one communication-during-discharge type portable multi-use power storage device 1 can be used, only one or more of the external power consuming devices 100 may allow such charging. In other words, charge of the communication-during-discharge type portable multi-use power storage device 1 by the power source may be possible when the detachable casing 4 is attached to an external power consuming device 100 which is the one or more of the external power consuming devices 100.

The communication-during-discharge type portable multi-use power storage device 1 may be chargeable by the power source while being attached to each of the external power consuming devices 100A, 100B, 100C, and 100D shown in FIG. 1. The rack transporter 100B may automatically run to the power source when the charge is required. A power input unit 130 of the motorcycle 100C may be connected to a plug of the power source in order for the power storage device main body 2 to be charged.

The communication-during-discharge type portable multi-use power storage device 1 includes the power storage device main body 2, the management device 3, the detachable casing 4, and the terminal portion 5.

The power storage device main body 2 is configured to be able to store electric power. The power storage device main body 2 is configured to be able to output stored electric power. The power storage device main body 2 is configured to be rechargeable. The power storage device main body 2 is, for example, a secondary battery, a super capacitor, or an ultracapacitor. For example, the power storage device main body 2 may be a battery pack having plural cells. For example, the power storage device main body 2 may include plural super capacitors or plural ultracapacitors. The power storage device main body 2 is not limited to these arrangements.

The detachable casing 4 houses the power storage device main body 2 and the management device 3. The detachable casing 4 has the handle 4a. The handle 4a is a grip which can be gripped by a hand H (see FIG. 1). The detachable casing 4 is attachable and detachable to and from the external power consuming device 100. The detachable casing 4 therefore causes the power storage device main body 2 and the management device 3 to be integrally attachable and detachable to and from the external power consuming device 100. A user can carry the communication-during-discharge type portable multi-use power storage device 1 in a suspended state, by gripping the handle 4a by a hand. The handle 4a may not be shaped as a grip. The handle 4a may have any shape as long as the communication-during-discharge type portable multi-use power storage device 1 can be carried by a hand.

The way of arranging the detachable casing 4 to be attachable and detachable to and from the external power consuming device 100 is not limited. The way of arranging the detachable casing 4 to be attachable and detachable to and from the external power consuming device 100 may utilize magnetic force, a thread locking mechanism, or a fitting structure with a protrusion and a concave. The way of arranging the detachable casing 4 to be attachable and detachable to and from the power supply device (not illustrated) is not limited.

The terminal portion 5 is provided on the detachable casing 4. The terminal portion 5 is electrically connected to the power storage device main body 2. The terminal portion 5 is connected to an electrode terminal of the power storage device main body 2 via the management device 3. As shown in FIG. 2, the terminal portion 5 is formed of a pair of electrode terminals 5a and 5b. The pair of electrode terminals 5a and 5b is formed of a cathode terminal (positive terminal) 5a and an anode terminal (negative terminal) 5b. The terminal portion 5 is provided on the detachable casing 4 to be accessible from the outside. The way of arranging the terminal portion 5 to be accessible from the outside is not limited. For example, if terminal portion 5 is exposed to the outside through an opening formed through the detachable casing 4, the terminal portion 5 is accessible from the outside. The terminal portion 5 transmits electric power between the outside of the detachable casing 4 and the power storage device main body 2. The terminal portion 5 supplies electric power stored in the power storage device main body 2 to the external power consuming device 100 no matter to which one of the external power consuming devices 100 of plural types the detachable casing 4 is attached. Electric power is supplied to the terminal portion 5 from the power supply device or the power source. The power storage device main body 2 is configured to store the electric power supplied to the terminal portion 5.

FIG. 1 and FIG. 2 show functional block diagrams of the communication-during-discharge type portable multi-use power storage device 1. The management device 3 includes an arithmetic processing device (processor) 15 and a storage device 16. The arithmetic processing device 15 is, for example, a CPU (Central Processing Unit), a GPU (Graphics Processing Unit), a microcontroller, a micro processing unit, an application specific integrated circuit (ASIC), a programmable logic circuit (PLC), or a field programmable gate array (FPGA), etc. The storage device 16 stores data. The storage device 16 stores information necessary for processes executed by the arithmetic processing device 15, The storage device 16 includes, for example, a ROM (Read Only Memory), or a RAM (Random Access Memory). The RAM temporarily stores data when the arithmetic processing device 15 executes a program. The ROM stores a program executed by the arithmetic processing device 15. As a program stored in the storage device 16 is executed by the arithmetic processing device 15, functional units are embodied.

The management device 3 includes the power management unit 10, the monitoring unit 11, and the communication-during-discharge control unit 14 which are functional units. The power management unit 10 is a functional unit which is embodied as a power management program stored in the storage device 16 is executed by the arithmetic processing device 15. The monitoring unit 11 is a functional unit which is embodied as a monitoring program stored in the storage device 16 is executed by the arithmetic processing device 15. The communication-during-discharge control unit 14 is a functional unit which is embodied as a communication control program stored in the storage device 16 is executed by the arithmetic processing device 15.

The management device 3 includes the use environment information acquisition unit 13. The use environment information acquisition unit 13 is formed of hardware. The use environment information acquisition unit 13 may be part of the arithmetic processing device 15.

The power management unit 10 is configured to manage the power storage device main body 2. When the power storage device main body 2 is a secondary battery, the power management unit 10 is constituted by a so-called BMS (Battery Management System). The power management unit 10 is configured to manage the charge and discharge of the power storage device main body 2. The power management unit 10 manages, for example, an amount of electric power stored in the power storage device main body 2.

The power management unit 10 may manage the power storage device main body 2 based on information directly acquired from the monitoring unit 11. As detailed later, the monitoring unit 11 is configured to monitor the state of the power storage device main body 2. In other words, the power management unit 10 may manage the power storage device main body 2 based on a result of monitoring of the power storage device main body 2 by the monitoring unit 11. The power management unit 10 may manage the power storage device main body 2 based on information sent from the external communication device 200. In the specific example of the present embodiment, the external communication device 200 is a server. The external communication device 200 may not be a server. The power management unit 10 may manage the power storage device main body 2 based on information directly acquired from the use environment information acquisition unit 13. As detailed later, the use environment information acquisition unit 13 acquires information related to the use environment of the power storage device main body 2. The power management unit 10 may use the above-described information for managing the power storage device main body 2 alone or may generate new information by combining the above-described information with another set of information.

The management device 3 includes the wireless communication unit 12. The wireless communication unit 12 is a device for wireless communications. The wireless communication unit 12 is able to send and receive information wirelessly. The wireless communication unit 12 is able to send and receive information wirelessly while the power storage device main body 2 is discharging to the external power consuming device 100. The wireless communication unit 12 may be able to at least send or receive information wirelessly in one of the following four cases. The wireless communication unit 12 may be able to send and receive information wirelessly in all of the following four cases. The first case is a case where a power storage device 1 is attached to the external power consuming device 100 and the power storage device main body 2 is performing neither discharging nor charging. The second case is a case where the power storage device main body 2 is being charged by a power supplier or a power source. The third case is a case where the power storage device 1 is attached to the power supply device and the power storage device main body 2 is not being charged. The fourth case is a case where the power storage device 1 is attached to none of the external power consuming device 100 and the power supply device.

The wireless communication unit 12 is able to mutually communicate with the external communication device 200. The wireless communication unit 12 is able to mutually communicate with the external communication device 200 while the power storage device main body 2 is outputting electric power to the external power consuming device 100. The wireless communication unit 12 may be able to mutually or one-way communicate with the external communication device 200 while the power storage device main body 2 does not output electric power to the external power consuming device 100. The external communication device 200 is physically distant from the communication-during-discharge type portable multi-use power storage device 1. When the power storage device main body 2 is outputting electric power to the external power consuming device 100, the distance between the external communication device 200 and the communication-during-discharge type portable multi-use power storage device 1 is almost always longer than the distance between the external power consuming device 100 and the communication-during-discharge type portable multi-use power storage device 1. In other words, while the power storage device main body 2 is outputting electric power to the external power consuming device 100, the external communication device 200 is more distant from the communication-during-discharge type portable multi-use power storage device 1 than the external power consuming device 100.

The wireless communication unit 12 may be able to mutually or one-way communicate with an apparatus which is different from the external communication device 200. For example, the wireless communication unit 12 may be able to mutually communicate with the power supply device. For example, the wireless communication unit 12 may be able to mutually communicate with an external power consuming device 100. For example, the wireless communication unit 12 may be able to mutually communicate with a mobile communication device such as a smartphone.

The communication system of the wireless communication unit 12 is not limited. The wireless communication unit 12 may be able to use plural communication systems. Communications between the wireless communication unit 12 and the external communication device 200 may be performed by a combination of plural communication systems. Communications between the wireless communication unit 12 and the external communication device 200 may be performed solely wirelessly communication, or by wired communication in addition to wireless communication. Communications between the wireless communication unit 12 and the external communication device 200 may or may not use the Internet. Communications between the wireless communication unit 12 and the external communication device 200 may be done by using a mobile phone communication system. The wireless communication unit 12 may send and receive information by using a mobile phone communication system. Examples of the mobile phone communication system used by the wireless communication unit 12 include Cellular networks such as 3G (3rd Generation), 4G (4th Generation), LTE (Long Term Evolution). The mobile phone communication system used by the wireless communication unit 12 may be a communication system established after the application date of the subject application. Communications between the wireless communication unit 12 and the external communication device 200 may be done by using a wireless LAN such as Wi-Fi. The wireless communication unit 12 may send and receive information by using a wireless LAN. Communications between the wireless communication unit 12 and the external communication device 200 may be done by using satellite communication. The wireless communication unit 12 may have a short-range communication function which is not used for communicating with the external communication device 200. Examples of the short-range communication function which is not used for communicating with the external communication device 200 include Bluetooth (registered trademark), NFC (Near Field Communication), etc.

The external communication device 200 is configured to acquire information sent from the management device 3. The external communication device 200 is configured to acquire information sent from plural communication-during-discharge type portable multi-use power storage devices 1. The external communication device 200 executes a suitable process to the acquired information. With this, the external communication device 200 generates information to be sent to the management device 3, and sends the information to the management device 3. In other words, based on information sent from one communication-during-discharge type portable multi-use power storage device 1, the external communication device 200 generates information to be sent to the management device 3 of the one communication-during-discharge type portable multi-use power storage device 1. Furthermore, based on information sent from at least one communication-during-discharge type portable multi-use power storage device 1, the external communication device 200 may generate information to be sent to the management device 3 of another communication-during-discharge type portable multi-use power storage device 1. Information to be sent to the management device 3 may include an instruction for managing the power storage device main body 2. By sending an instruction to the management device 3, the external communication device 200 manages the communication-during-discharge type portable multi-use power storage device 1. The external communication device 200 manages plural communication-during-discharge type portable multi-use power storage devices 1. The external communication device 200 may send, to the management device 3, information other than the instruction for managing the power storage device main body 2.

As shown in FIG. 2, the external communication device 200 includes an arithmetic processing device 201 and a storage device 202. A specific example of the arithmetic processing device 201 is identical to the specific example of the arithmetic processing device 15. A specific example of the storage device 202 is identical to the specific example of the storage device 16. The storage device 202 stores information necessary for processes executed by the arithmetic processing device 201.

We will go back to the explanation of the management device 3. The monitoring unit 11 is configured to monitor the state of the power storage device main body 2. The monitoring unit 11 monitors input and output of a current to and from the power storage device main body 2 and an amount of electric power stored in the power storage device main body 2. The monitoring unit 11 performs the monitoring based on signals from an unillustrated sensor (e.g., a current sensor) of the communication-during-discharge type portable multi-use power storage device 1. The unillustrated sensor is provided at a circuit which connects the terminal portion 5 with the power storage device main body 2. The monitoring unit 11 may monitor the voltage of the power storage device main body 2. This monitoring is performed based on signals from an unillustrated sensor (e.g., a voltage sensor) of the communication-during-discharge type portable multi-use power storage device 1, too.

The monitoring unit 11 is configured to monitor the discharge of the power storage device main body 2. In other words, the monitoring unit 11 monitors the discharge from the power storage device main body 2 to the external power consuming device 100. The monitoring unit 11 monitors the discharge of the power storage device main body 2 based on at least one of the output of a current from the power storage device main body 2 or an amount of electric power stored in the power storage device main body 2. The monitoring of the discharge of the power storage device main body 2 may indicate the monitoring of only whether the power storage device main body 2 discharges or not. To be more specific, for example, the monitoring unit 11 monitors whether the power storage device main body 2 outputs a current. The monitoring of the discharge of the power storage device main body 2 may indicate monitoring of a change of electric power output from the power storage device main body 2. To be more specific, for example, the monitoring unit 11 may monitor a change of the electric power output from the power storage device main body 2 by continuously or intermittently monitoring an amount of electric power stored in the power storage device main body 2. Alternatively, for example, the monitoring unit 11 may monitor a change of electric power output from the power storage device main body 2 based on a result of measurement of time during which a current is output from the power storage device main body 2.

The monitoring unit 11 is configured to monitor the charge of the power storage device main body 2. In other words, the monitoring unit 11 monitors the supply of electric power to the power storage device main body 2 from the power supply device or the power source. The monitoring unit 11 monitors the charge of the power storage device main body 2 based on at least one of the input of a current to the power storage device main body 2 or an amount of electric power stored in the power storage device main body 2. The monitoring of the charge of the power storage device main body 2 may indicate monitoring of only whether the power storage device main body 2 is charged or not. To be more specific, for example, the monitoring unit 11 may monitor whether or not a current is input to the power storage device main body 2. Alternatively, for example, the monitoring unit 11 may monitor whether the power storage device main body 2 is electrically connected to the power supply device. The monitoring of the charge of the power storage device main body 2 may indicate monitoring of a change of electric power supplied to the power storage device main body 2. To be more specific, for example, a change of the electric power supplied to the power storage device main body 2 may be monitored by continuously or intermittently monitoring an amount of electric power stored in the power storage device main body 2. Alternatively, for example, the monitoring unit 11 may monitor a change of electric power supplied to the power storage device main body 2 based on a result of measurement of time during which a current is input to the power storage device main body 2.

The monitoring unit 11 is configured to monitor whether a current input to or output from the power storage device main body 2 is an overcurrent. The overcurrent indicates a current which exceeds a predetermined value (acceptable value) which is set in advance in the power storage device main body 2. The power management unit 10 manages a current input to or output from the power storage device main body 2 not to become an overcurrent based on a monitoring result of the power storage device main body 2 by the monitoring unit 11. When, for example, the monitoring unit 11 detects that a current input to the power storage device main body 2 is an overcurrent, the power management unit 10 stops the charge of the power storage device main body 2. When, for example, the monitoring unit 11 detects that a current output from the power storage device main body 2 is an overcurrent, the power management unit 10 stops the discharge of the power storage device main body 2.

The monitoring unit 11 is configured to monitor whether the power storage device main body 2 is in an overcharged state. The overcharged state is a state in which the power storage device main body 2 in a fully charged state is storing more electric charges. The fully charged state is a state in which the charged amount is identical with the electrical capacity of the power storage device main body 2. The monitoring unit 11 is able to monitor whether the power storage device main body 2 is in the overcharged state by monitoring whether the voltage of the power storage device main body 2 exceeds a predetermined value. The power management unit 10 manages the power storage device main body 2 not to be in the overcharged state based on a monitoring result of the power storage device main body 2 by the monitoring unit 11.

The monitoring unit 11 is configured to monitor whether the power storage device main body 2 is in an over-discharged state. The over-discharged state is a state in which electric charges are excessively discharged from the power storage device main body 2 and hence the voltage of the power storage device main body 2 is lower than the discharge cut off voltage. The monitoring unit 11 is able to monitor whether the power storage device main body 2 is in the over-discharged state by monitoring the voltage of the power storage device main body 2. The power management unit 10 manages the power storage device main body 2 not to be in the over-discharged state based on a monitoring result of the power storage device main body 2 by the monitoring unit 11.

The monitoring unit 11 may monitor the cumulative time of the discharge of the power storage device main body 2. The monitoring unit 11 may monitor the discharge of the power storage device main body 2 based on this monitoring result. The monitoring unit 11 may monitor the cumulative time of the charge of the power storage device main body 2. The monitoring unit 11 may monitor the charge of the power storage device main body 2 based on this monitoring result.

The arithmetic processing device 15 of the management device 3 may estimate the degree of deterioration of the power storage device main body 2 based on a monitoring result by the monitoring unit 11.

The monitoring unit 11 may monitor whether the power storage device 1 is attached to the external power consuming device 100. Based on a combination of this monitoring result and a monitoring result of the discharge of the power storage device main body 2, it is possible to grasp that the external power consuming device 100 to which the power storage device 1 is attached is in a state of not consuming electric power (e.g., a standby state such as a power save mode). This monitoring may be performed as below, for example. A sensor is provided in the communication-during-discharge type portable multi-use power storage device 1 or the external power consuming device 100 to detect whether the power storage device 1 is attached to the external power consuming device 100. The monitoring unit 11 may monitor whether the power storage device 1 is attached to the external power consuming device 100, based on a detection result of this sensor. The information indicating whether the power storage device 1 is attached to the external power consuming device 100 may be included in later-described use environment information. In such a case, a functional unit which determines whether the power storage device 1 is attached to the external power consuming device 100 may not be included in the monitoring unit 11.

The monitoring unit 11 may monitor whether the power storage device 1 is attached to the power supply device. Based on a combination of this monitoring result and a monitoring result of the charge of the power storage device main body 2, it is possible to grasp that the power supply device to which the power storage device 1 is attached is in a state of not supplying electric power to the power storage device main body 2 (e.g., a state after the completion of the charge). This monitoring may be performed as below, for example. A sensor is provided in the communication-during-discharge type portable multi-use power storage device 1 or the power supply device to detect whether the power storage device 1 is attached to the power supply device. The monitoring unit 11 may monitor whether the power storage device 1 is attached to the power supply device, based on a detection result of this sensor. The information indicating whether the power storage device 1 is attached to the power supply device may be included in later-described use environment information. In such a case, a functional unit which determines whether the power storage device 1 is attached to the power supply device may not be included in the monitoring unit 11.

The use environment information acquisition unit 13 acquires use environment information related to the use environment of the power storage device main body 2. In the specific example of the present embodiment, the use environment of the power storage device main body 2 (i.e., the environment in which the power storage device main body 2 is used) is the environment in which the detachable casing 4 is attached to the external power consuming device 100 or the power supply device.

The use environment information acquisition unit 13 acquires use environment information related to the use environment of the power storage device main body 2 in the power storage device 1 attached to the external power consuming device 100. The use environment information acquisition unit 13 acquires use environment information related to the use environment of the power storage device main body 2 which is discharging to the external power consuming device 100. The use environment information acquisition unit 13 may acquire use environment information related to the use environment of the power storage device main body 2 in the power storage device 1 attached to the external power consuming device 100, the power storage device main body 2 performing neither the charge nor the discharge. The use environment information acquisition unit 13 may acquire use environment information related to the use environment of the power storage device main body 2 which is being charged by the power supply device or the power source. The use environment information acquisition unit 13 may acquire use environment information related to the use environment of the power storage device main body 2 in the power storage device 1 attached, the power storage device main body 2 not being charged. The use environment information acquisition unit 13 may acquire storage environment information related to storage environment of the power storage device main body 2 in the power storage device 1 attached neither to the external power consuming device 100 nor to the power supply device.

The use environment information acquisition unit 13 may acquire use environment information sent from a sensor or an arithmetic processing device (hereinafter, these members will be referred to as a sensor, etc.) provided in the communication-during-discharge type portable multi-use power storage device 1. For example, in FIG. 2, the use environment information acquisition unit 13 acquires, through a wire, use environment information (signal) sent from a sensor 20 of the communication-during-discharge type portable multi-use power storage device 1. The use environment information acquisition unit 13 may acquire use environment information sent from a sensor or an arithmetic processing device (hereinafter, these members will be referred to as a sensor, etc.) provided in the external power consuming device 100. For example, in FIG. 2, the use environment information acquisition unit 13 acquires use environment information (signal) sent from a sensor 101 of the external power consuming device 100. In this case, the communication-during-discharge type portable multi-use power storage device 1 may include a terminal 21 by which communication with the external power consuming device 100 is performed, and the use environment information acquisition unit 13 may acquire use environment information sent from the sensor 101 via the terminal 21. Alternatively, the use environment information acquisition unit 13 may acquire use environment information sent from the sensor 101 wirelessly communication between a wireless communication device 102 of the external power consuming device 100 and the wireless communication unit 12. The use environment information acquisition unit 13 may acquire use environment information sent from a sensor, etc. which is provided in the power supply device. The use environment information acquisition unit 13 acquires storage environment information sent from a sensor, etc. (e.g., the sensor 20) provided in the communication-during-discharge type portable multi-use power storage device 1.

The use environment information related to the use environment of the power storage device main body 2 may include information of the surrounding environment of the power storage device main body 2, or may include information of the power storage device main body 2 itself, which relates to the use environment of the power storage device main body 2. The use environment information may be information indicating a temporal change. The use environment information acquisition unit 13 may acquire information of the surrounding environment of the power storage device main body 2 from a sensor, etc. (e.g., the sensor 20) of the communication-during-discharge type portable multi-use power storage device 1, from a sensor, etc. (e.g., the sensor 101) of the external power consuming device 100, or from a sensor, etc. of the power supply device. The use environment information acquisition unit 13 may acquire information of the power storage device main body 2 itself related to the use environment of the power storage device main body 2 from a sensor, etc. (e.g., the sensor 20) of the communication-during-discharge type portable multi-use power storage device 1, from a sensor, etc. (e.g., the sensor 101) of the external power consuming device 100, or from a sensor, etc. of the power supply device. All sets of use environment information acquired by the use environment information acquisition unit 13 may be sent from a sensor, etc. of the communication-during-discharge type portable multi-use power storage device 1. All sets of use environment information acquired by the use environment information acquisition unit 13 may not be sent from a sensor, etc. of the communication-during-discharge type portable multi-use power storage device 1.

The information of the surrounding environment of the power storage device main body 2 may include information related to the temperature around the power storage device main body 2. The information related to the temperature may be a temperature, a voltage signal from a temperature sensor, or information by which a temperature can be indirectly understood.

The information of the surrounding environment of the power storage device main body 2 may include information related to the moisture around the power storage device main body 2. The information related to the moisture may be a moisture, a voltage signal from a moisture sensor, or information by which a moisture can be indirectly understood.

The information of the surrounding environment of the power storage device main body 2 may include information related to the air pressure around the power storage device main body 2. The information related to the air pressure may be an air pressure, a voltage signal from an air pressure sensor, or information by which an air pressure can be indirectly understood (e.g., altitude). The altitude may be calculated based on the information of absolute location and map data.

The information of the power storage device main body 2 itself related to the use environment of the power storage device main body 2 may include information related to the location of the power storage device main body 2. The information related to the location of the power storage device main body 2 may be information of the absolute location of the power storage device main body 2 (e.g., longitude and latitude). The information of the absolute location may be a GNSS signal received by a GNSS receiver. GNSS stands for Global Navigation Satellite System. The wireless communication unit 12 may function as a GNSS receiver. The information related to the location of the power storage device main body 2 may be information of the relative location of the power storage device main body 2. The reference point of the relative location is not limited.

The information of the power storage device main body 2 itself related to the use environment of the power storage device main body 2 may include information related to the posture of the power storage device main body 2. The information related to the posture of the power storage device main body 2 may be information of the inclination of the power storage device main body 2. The information of the inclination of the power storage device main body 2 may be a rotational angle of the power storage device main body 2 relative to the reference position, the rotational angular speed of the power storage device main body 2, or the rotational angular acceleration of the power storage device main body 2. The information of the inclination of the power storage device main body 2 may be information related to the rotation (inclination) about three axes, or information related to the rotation (inclination) about one axis or two axes, The information of the inclination of the power storage device main body 2 may include, for example, a signal detected by a gyroscope (angular speed sensor) or a value calculated based on the signal. The information of the inclination of the power storage device main body 2 may include, for example, a signal detected by at least one angular acceleration sensor or a value calculated based on the signal.

When the orientation of the attached communication-during-discharge type portable multi-use power storage device 1 is different between the external power consuming devices 100, the information related to the posture of the power storage device main body 2 may be information of the orientation of the attached communication-during-discharge type portable multi-use power storage device 1.

The information of the power storage device main body 2 itself related to the use environment of the power storage device main body 2 may include information related to the speed of the movement of the power storage device main body 2. The information related to the speed may be speed, a voltage signal from a speed sensor, or information by which speed can be indirectly understood. The speed of the movement of the power storage device main body 2 may be the speed of the movement of the external power consuming device 100. When, for example, the external power consuming device 100 is a motorcycle 100C, the motorcycle 100C includes a vehicle speed sensor. In this case, the use environment information acquisition unit 13 may acquire the vehicle speed detected by the vehicle speed sensor as the use environment information.

The information of the power storage device main body 2 itself related to the use environment of the power storage device main body 2 may include information related to the acceleration of the movement of the power storage device main body 2. The information related to the acceleration may be acceleration, a voltage signal from an accelerometer, or information by which acceleration can be indirectly understood. The acceleration may be a value acquired from a voltage signal of an accelerometer, or a value acquired by differentiating the speed. The acceleration of the power storage device main body 2 can be used as an index for determining an impact on the power storage device main body 2 or vibration of the power storage device main body 2. That is to say, it may be possible to determine that there is an impact or vibration, when the acceleration rapidly changes.

The information of the power storage device main body 2 itself related to the use environment of the power storage device main body 2 may include information related to a pressure received by the power storage device main body 2. The information related to the pressure may be a pressure, a voltage signal from a pressure sensor, or information by which a pressure can be indirectly understood. The magnitude of a pressure received by the power storage device main body 2 can be used as an index for grasping the distortion of the power storage device main body 2. That is to say, when the pressure received by the power storage device main body 2 is higher than a predetermined value, it may be determined that there is a possibility that the power storage device main body 2 is distorted.

The use environment information related to the use environment of the power storage device main body 2 may be ID information (identification information) which is given to each type of the external power consuming devices 100. The use environment of the power storage device main body 2 may be different between the types of the external power consuming devices 100. The use environment information acquisition unit 13 acquires this ID information from the external power consuming device 100.

A specific example of the storage environment information related to the storage environment of the power storage device main body 2 is, among the above-described specific examples of the use environment information, information which can be acquired in a state in which the power storage device 1 is attached neither to the external power consuming device 100 nor to the power supply device.

At least part of the use environment information acquired by the use environment information acquisition unit 13 is sent to the wireless communication unit 12. At least part of the storage environment information acquired by the use environment information acquisition unit 13 may be similarly sent to the wireless communication unit 12, too. The use environment information acquired by the use environment information acquisition unit 13 may be stored in the storage device 16. The storage environment information acquired by the use environment information acquisition unit 13 may be similarly stored in the storage device 16, too. The use environment information acquired by the use environment information acquisition unit 13 may be sent to the power management unit 10. The storage environment information acquired by the use environment information acquisition unit 13 may be similarly sent to the power management unit 10, too.

The communication-during-discharge control unit 14 instructs the wireless communication unit 12 to send information. In other words, the communication-during-discharge control unit 14 causes the wireless communication unit 12 to send information wirelessly. Furthermore, the communication-during-discharge control unit 14 acquires information that the wireless communication unit 12 receives wirelessly.

While the monitoring unit 11 indicates that the power storage device main body 2 is discharging, the communication-during-discharge control unit 14 causes the wireless communication unit 12 to send information to the external communication device 200 wirelessly. To put it differently, the communication-during-discharge control unit 14 causes the wireless communication unit 12 to send information wirelessly to the external communication device 200 while the power storage device main body 2 is discharging. Hereinafter, a state in which the monitoring unit 11 is indicates that the power storage device main body 2 is discharging is termed discharge monitoring. Furthermore, the communication-during-discharge control unit 14 may cause the wireless communication unit 12 to send information wirelessly to the external communication device 200 while the power storage device main body 2 does not discharge. To be more specific, the communication-during-discharge control unit 14 may cause the wireless communication unit 12 to send information wirelessly to the external communication device 200, in the following four cases. The first case is a case where the power storage device 1 is attached to the external power consuming device 100 and the power storage device main body 2 is performing neither discharging nor charging. The second case is a case where the power storage device main body 2 is being charged by the power supply device or the power source. The third case is a case where the power storage device 1 is attached to the power supply device and the power storage device main body 2 is not being charged. The fourth case is a case where the power storage device 1 is attached to none of the external power consuming device 100 and the power supply device.

During the discharge monitoring, the communication-during-discharge control unit 14 causes the wireless communication unit 12 to send, wirelessly, at least part of the use environment information acquired by the use environment information acquisition unit 13 to the external communication device 200. In the first to third cases described above, the communication-during-discharge control unit 14 may cause the wireless communication unit 12 to send, wirelessly, at least part of the use environment information acquired by the use environment information acquisition unit 13 to the external communication device 200. During the discharge monitoring and in the first to third cases described above, the communication-during-discharge control unit 14 may cause the wireless communication unit 12 to send, wirelessly, all of the use environment information acquired by the use environment information acquisition unit 13 to the external communication device 200. During the discharge monitoring and in the first to third cases described above, the communication-during-discharge control unit 14 may cause the wireless communication unit 12 to send, wirelessly, only part of the use environment information acquired by the use environment information acquisition unit 13 to the external communication device 200. In this instance, the use environment information sent from the wireless communication unit 12 to the external communication device 200 may be voluntarily set by the user or set by default. Alternatively, the use environment information may be set based on an instruction sent from the external communication device 200.

In the fourth case described above, the communication-during-discharge control unit 14 causes the wireless communication unit 12 to send, wirelessly, at least part of the storage environment information acquired by the use environment information acquisition unit 13 to the external communication device 200.

During the discharge monitoring, the communication-during-discharge control unit 14 causes the wireless communication unit 12 to send, wirelessly, the use environment information related to the use environment of the power storage device main body 2 under discharge to the external communication device 200. During the discharge monitoring, the communication-during-discharge control unit 14 may cause the wireless communication unit 12 to send, wirelessly, the use environment information (or the storage environment information) related to the use environment (or storage environment) of the power storage device main body 2 not under discharge (i.e., before discharge) to the external communication device 200.

In the first case above, the communication-during-discharge control unit 14 may cause the wireless communication unit 12 to send, wirelessly, the use environment information related to the power storage device main body 2 in the first case to the external communication device 200. In the first case described above, the communication-during-discharge control unit 14 may cause the wireless communication unit 12 to send, wirelessly, the use environment information (or the storage environment information) related to the use environment (or storage environment) of the power storage device main body 2 in a case different from the first case to the external communication device 200. For example, when the management device 3 receives a discharge start instruction from the external power consuming device 100, the communication-during-discharge control unit 14 causes the wireless communication unit 12 to send, wirelessly, the use environment information related to the use environment of the power storage device main body 2 before the start of the discharge to the external communication device 200.

In the second case above, the communication-during-discharge control unit 14 may cause the wireless communication unit 12 to send, wirelessly, the use environment information related to the power storage device main body 2 in the second case to the external communication device 200. In the second case described above, the communication-during-discharge control unit 14 may cause the wireless communication unit 12 to send, wirelessly, the use environment information (or the storage environment information) related to the use environment (or storage environment) of the power storage device main body 2 in a case different from the second case to the external communication device 200.

In the third case above, the communication-during-discharge control unit 14 may cause the wireless communication unit 12 to send, wirelessly, the use environment information related to the power storage device main body 2 in the third case to the external communication device 200. In the third case described above, the communication-during-discharge control unit 14 may cause the wireless communication unit 12 to send, wirelessly, the use environment information (or the storage environment information) related to the use environment (or storage environment) of the power storage device main body 2 in a case different from the third case to the external communication device 200.

In the fourth case described above, the communication-during-discharge control unit 14 may cause the wireless communication unit 12 to send, wirelessly, the storage environment information related to the storage environment of the power storage device main body 2 in a case different from the fourth case to the external communication device 200. In the fourth case described above, the communication-during-discharge control unit 14 may cause the wireless communication unit 12 to send, wirelessly, the use environment information related to the use environment of the power storage device main body 2 in a case different from the fourth case to the external communication device 200.

During the discharge monitoring and in the first to third cases described above, the communication-during-discharge control unit 14 may cause the wireless communication unit 12 to send, wirelessly, a monitoring result by the monitoring unit 11 to the external communication device 200. For example, during the discharge monitoring or in the second case above (on charge), the wireless communication unit 12 may send information of an amount of electric power stored in the power storage device main body 2, which is acquired based on the monitoring by the monitoring unit 11. Furthermore, for example, during the discharge monitoring, the wireless communication unit 12 may send a monitoring result of the discharge of the power storage device main body 2. Furthermore, for example, in the second case above (on charge), the wireless communication unit 12 may send a monitoring result of the input of electric power to the power storage device main body 2. Furthermore, for example, in the first case above, the wireless communication unit 12 may send information indicating that the power storage device 1 is attached to the external power consuming device 100. Furthermore, for example, in the third case above, the wireless communication unit 12 may send information indicating that the power storage device 1 is attached to the power supply device.

During the discharge monitoring and in the first case above, the communication-during-discharge control unit 14 may cause the wireless communication unit 12 to send, wirelessly, information which is neither the use environment information nor a monitoring result by the monitoring unit 11 to the external communication device 200. This information is, for example, information related to the external power consuming device 100 but is not directly related to the charge and discharge of the power storage device 1. Such information is termed operation information of the external power consuming device 100. The power storage device 1 acquires the operation information of the external power consuming device 100 from the external power consuming device 100. For example, when the external power consuming device 100 is a motorcycle 100C, the operation information of the external power consuming device 100 may be information of the air pressure of a tire or information for fault diagnosis of devices of the motorcycle 100C.

The frequency that the communication-during-discharge control unit 14 causes the wireless communication unit 12 to send information to the external communication device 200 is preferably higher in the discharge monitoring than in the first case above. The frequency that the communication-during-discharge control unit 14 causes the wireless communication unit 12 to send information to the external communication device 200 may be identical between the discharge monitoring and the first case. The frequency that the communication-during-discharge control unit 14 causes the wireless communication unit 12 to send information to the external communication device 200 may be identical or different between the discharge monitoring and the second case (on charge). The frequency that the communication-during-discharge control unit 14 causes the wireless communication unit 12 to send information to the external communication device 200 is preferably higher in the second case (on charge) than in the third case, but may be identical between the second case and the third case. The frequency that the communication-during-discharge control unit 14 causes the wireless communication unit 12 to send information to the external communication device 200 is preferably higher in the discharge monitoring than in the fourth case, but may be identical between the discharge monitoring and the fourth case.

The frequency of sending information from the wireless communication unit 12 to the external communication device 200 may be different depending on the type of information sent from the wireless communication unit 12 to the external communication device 200. The frequency of sending information from the wireless communication unit 12 to the external communication device 200 may be the same irrespective of the type of information sent from the wireless communication unit 12 to the external communication device 200.

The communication-during-discharge control unit 14 acquires outside information which is sent from the external communication device 200 and received by the wireless communication unit 12 wirelessly. To be more specific, during the discharge monitoring, the communication-during-discharge control unit 14 acquires outside information which is sent from the external communication device 200 and received by the wireless communication unit 12 wirelessly. In the first to fourth cases described above, the communication-during-discharge control unit 14 may acquire outside information which is sent from the external communication device 200 and received by the wireless communication unit 12 wirelessly.

The outside information sent from the external communication device 200 to the wireless communication unit 12 may or may not be information that the communication-during-discharge control unit 14 requests the external communication device 200 to send via the wireless communication unit 12. The outside information sent from the external communication device 200 to the wireless communication unit 12 may include information generated by the arithmetic processing device 201 of the external communication device 200 based on information sent from the management device 3. To be more specific, the outside information sent from the external communication device 200 to the wireless communication unit 12 includes information generated based on the use environment information (or the storage environment information) sent from the management device 3. The outside information sent from the external communication device 200 to the wireless communication unit 12 may include information generated based on a monitoring result by the monitoring unit, which is sent from the management device 3. The outside information sent from the external communication device 200 to the wireless communication unit 12 may include information generated based on the above-described operation information of the external power consuming device 100, which is sent from the management device 3.

The outside information sent from the external communication device 200 to the wireless communication unit 12 may include information used for managing the power storage device main body 2. The information used for managing the power storage device main body 2 may be an instruction. The power management unit 10 is configured to manage the power storage device main body 2 based on the information used for managing the power storage device main body 2. The instruction for managing the power storage device main body 2 may be an instruction to change an operation for managing the power storage device main body 2, or an instruction to stop the discharge or charge of the power storage device main body 2. The information used for managing the power storage device main body 2 may be information of limitation at the time of the discharge or charge of the power storage device main body 2. Specific examples of the information of limitation include a maximum current, a maximum voltage, a minimum voltage, a maximum temperature, a minimum temperature, etc. The outside information sent from the external communication device 200 to the wireless communication unit 12 may include information prompting the inspection of the power storage device main body 2. The outside information sent from the external communication device 200 to the wireless communication unit 12 may include information which notifies the replacement timing of the communication-during-discharge type portable multi-use power storage device 1.

When the use environment of the power storage device main body 2 may influence on the functions of the power storage device main body 2, the external communication device 200 may send an instruction to stop the discharge or charge of the power storage device main body 2 or information prompting the inspection of the power storage device main body 2. The use environment of the power storage device main body 2 may influence on the functions of the power storage device main body 2 when, for example, there is an impact on the power storage device main body 2 or vibration of the power storage device main body 2, or when the temperature around the power storage device main body 2 is extremely high or low.

The storage device 202 of the external communication device 200 stores a program and sets of data for generating outside information corresponding to the use environment information (and the storage environment information). The storage device 202 of the external communication device 200 may store the ID information of the external power consuming device 100 and information associated with the ID information. The information associated with the ID information may include information related to the use environment of the power storage device main body 2 corresponding to the external power consuming device 100. The information associated with the ID information may include information for managing the power storage device main body 2. Upon receiving the ID information from the management device 3, the arithmetic processing device 201 of the external communication device 200 generates information for managing the power storage device main body 2, based on the information which is stored in the storage device 202 in association with the ID information. The information stored in the storage device 202 in association with the ID information is updated. The update is executed by using information supplied from the external power consuming device 100, for example. Because the information associated with the ID information is updated, the management device 3 is able to acquire outside information generated based on the updated information, only by sending the ID information to the external communication device 200.

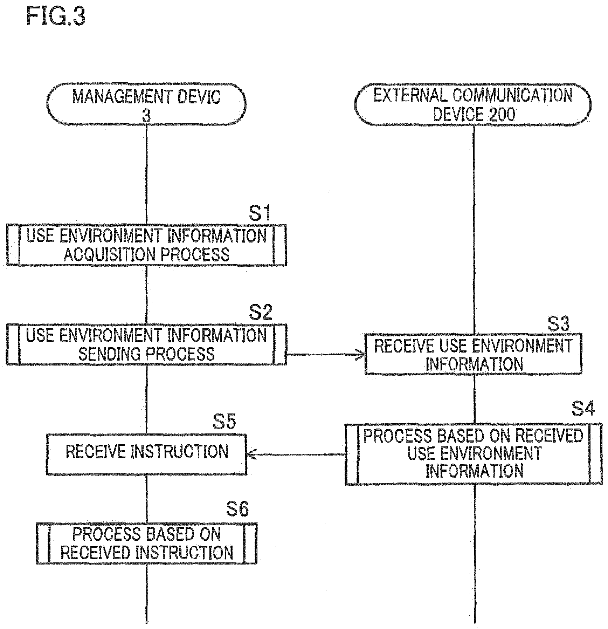

With reference to FIG. 3, the following will describe an example of processes executed by the management device 3 and the external communication device 200 when the communication-during-discharge type portable multi-use power storage device 1 is attached to the external power consuming device 100. FIG. 3 is a sequence diagram showing the processes executed by the management device 3 and the external communication device 200 when the communication-during-discharge type portable multi-use power storage device 1 is attached to the external power consuming device 100.

In the step S1, the management device 3 executes a use environment information acquisition process which is a process of acquiring the use environment information.

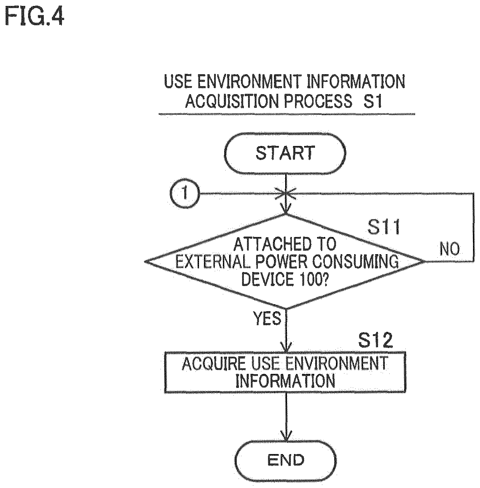

With reference to FIG. 4, the following will describe the use environment information acquisition process executed by the management device 3. FIG. 4 is a flow chart of the use environment information acquisition process executed by the management device 3.

In the step S11, the management device 3 determines whether the power storage device 1 is attached to the external power consuming device 100. A monitoring result by the monitoring unit 11 (or the use environment information) is used for this determination. When the power storage device main body 2 is not attached to the external power consuming device 100 (NO in the step S11), the management device 3 waits for the use of the power storage device main body 2 for the external power consuming device 100. When the power storage device 1 is attached to the external power consuming device 100 (YES in the step S11), the use environment information acquisition unit 13 of the management device 3 acquires the use environment information in the step S12. The management device 3 then finishes the use environment information acquisition process.

The step S11 may be omitted. In other words, the use environment information acquisition unit 13 of the management device 3 may acquire the use environment information without determining whether the power storage device 1 is attached to the external power consuming device 100. In this case, the monitoring unit 11 may not monitor whether the power storage device 1 is attached to the external power consuming device 100.

The explanation is continued with reference to FIG. 3 again. After the finish of the use environment information acquisition process, in the step S2, the management device 3 executes a use environment information sending process which is a process of sending at least part of the use environment information acquired in the use environment information acquisition process to the external communication device 200. In the step S2, the management device 3 may send information other than the use environment information (e.g., a monitoring result by the monitoring unit) to the external communication device 200.

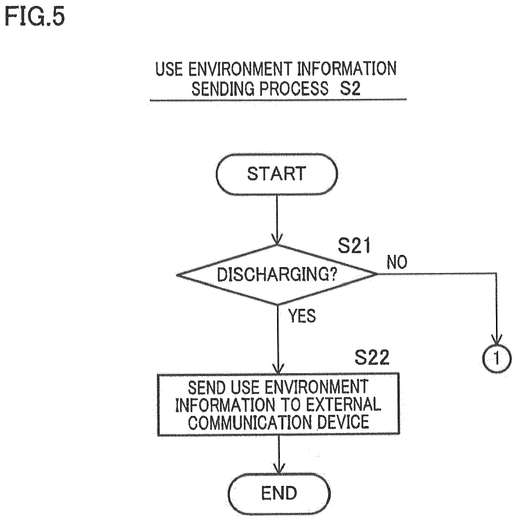

With reference to FIG. 5, the following will describe the use environment information sending process (step S2) executed by the management device 3 will be described. FIG. 5 is a flow chart of the use environment information sending process executed by the management device 3.

In the step S21, the management device 3 determines whether the power storage device main body 2 is discharging to the external power consuming device 100. A monitoring result of the discharge of the power storage device main body 2 by the monitoring unit 11 is used for this determination. When the power storage device main body 2 is not discharging (NO in the step S21), the management device 3 returns to the use environment information acquisition process. When the power storage device main body 2 is discharging (YES in the step S21), the management device 3 sends, in the step S22, at least part of the use environment information acquired in the use environment information acquisition process from the wireless communication unit 12 to the external communication device 200. The management device 3 then finishes the use environment information sending process.

The explanation is continued with reference to FIG. 3 again. When the management device 3 executes the use environment information sending process, at least part of the use environment information acquired in the use environment information acquisition process is sent to the external communication device 200. In the step S3, the external communication device 200 receives the use environment information sent from the management device 3. In the step S4, the external communication device 200 executes a process based on the received use environment information.

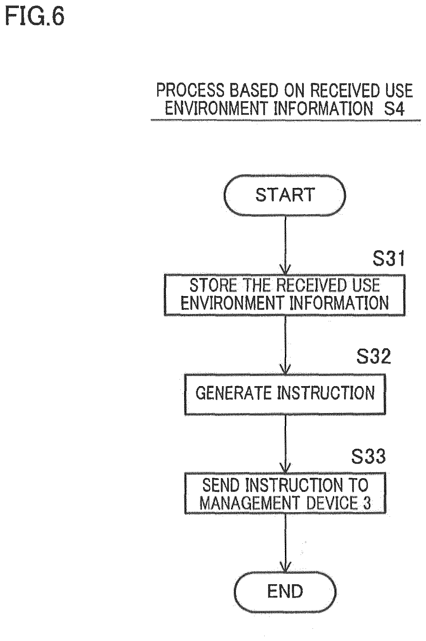

With reference to FIG. 6, the following will describe the process of the step S4 which is executed by the external communication device 200 based on the received use environment information. FIG. 6 is a flow chart of this process executed by the external communication device 200.

In the step S31, the external communication device 200 causes the storage device 202 to store the received use environment information. Subsequently, in the step S32, the external communication device 200 generates an instruction for managing the power storage device main body 2 based on the use environment information stored in the storage device 202. At this stage, the external communication device 200 may generate an instruction for managing the power storage device main body 2 based on the use environment information and information which is different from the use environment information and sent from the management device 3. In the step S32, the external communication device 200 may generate information other than the instruction, based on the information sent from the management device 3. Subsequently, in the step S33, the external communication device 200 sends the instruction generated in the step S32 to the management device 3. When information other than the instruction was generated in the step S32, the information is also sent to the management device 3. Thereafter, the external communication device 200 finishes the process based on the use environment information from the management device 3.

The explanation is continued with reference to FIG. 3 again. In the step S5, the management device 3 receives an instruction sent from the external communication device 200. In the step S6, the management device 3 executes a process based on the received instruction.

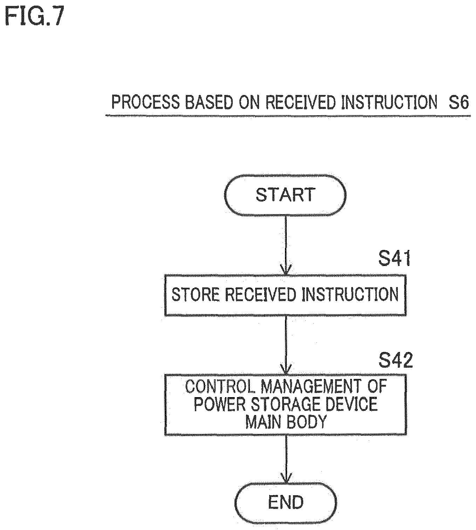

With reference to FIG. 7, the following will describe the process of the step S6 which is executed by the management device 3 based on the received instruction. FIG. 7 is a flow chart of this process executed by the management device 3.

In the step S41, the management device 3 stores the received instruction in the storage device 16. Subsequently, in the step S42, the management device 3 controls the management of the power storage device main body 2 based on the instruction stored in the storage device 16. In other words, the discharge from the power storage device main body 2 to the external power consuming device 100 is controlled. Thereafter, the management device 3 finishes the process based on the instruction from the external communication device 200.

The specific example of the embodiment of the present teaching has been described hereinabove. The specific example of the embodiment of the present teaching has the following effects in addition to the effects obtained by the above-described embodiment of the present teaching.

When the wireless communication unit 12 communicates with the external communication device 200 by a mobile phone communication system, the following effects are obtained. Because the communications between the communication-during-discharge type portable multi-use power storage device 1 and the external communication device 200 are performed by a communication system with high convenience, the applications of the communication-during-discharge type portable multi-use power storage device 1 can be further extended.

When the use environment information includes information related to the temperature around the power storage device main body 2, the outside information sent from the external communication device 200 may include information related to the management of the power storage device main body 2 in accordance with the temperature of the power storage device main body 2. When the use environment information includes information related to the moisture around the power storage device main body 2, the outside information sent from the external communication device 200 may include information related to the management of the power storage device main body 2 in accordance with the moisture of the power storage device main body 2. When the use environment information includes information related to the air pressure around the power storage device main body 2, the outside information sent from the external communication device 200 may include information related to the management of the power storage device main body 2 in accordance with the air pressure of the power storage device main body 2. When the use environment information includes information related to the location of the power storage device main body 2, the outside information sent from the external communication device 200 may include information related to the management of the power storage device main body 2 in accordance with the location of the power storage device main body 2. In any case, the versatility regarding the management of the power storage device main body 2 is improved when the outside information includes the information described above. As a result, the applications of the communication-during-discharge type portable multi-use power storage device 1 can be further extended.

When the power management unit 10 manages the power storage device main body 2 based on a monitoring result of the discharge of the power storage device main body 2 by the monitoring unit 11, the versatility regarding the management of the power storage device main body 2 is improved. As a result, the applications of the communication-during-discharge type portable multi-use power storage device 1 can be further extended.

When the external communication device 200 acquires a monitoring result of the power storage device main body 2 by the monitoring unit 11 in addition to the use environment information of the power storage device main body 2, the outside information sent from the external communication device 200 to the wireless communication unit 12 may include information generated based on the monitoring result by the monitoring unit 11 and the use environment information. The communication-during-discharge type portable multi-use power storage device 1 is therefore able to acquire, from the external communication device 200, the information for managing the power storage device main body 2 corresponding to the monitoring result by the monitoring unit 11 and the use environment information, while the power storage device main body 2 is discharging. The versatility regarding the management of the power storage device main body 2 is therefore further improved. The applications of the communication-during-discharge type portable multi-use power storage device 1 can be further extended.

When the communication-during-discharge type portable multi-use power storage device 1 detached from the external power consuming device 100 is chargeable, the communication-during-discharge type portable multi-use power storage device 1 of the present teaching can be used for the external power consuming device 100 having such a charging system. In other words, the applications of the communication-during-discharge type portable multi-use power storage device 1 can be further extended.

When the communication-during-discharge type portable multi-use power storage device 1 attached to the external power consuming device 100 is chargeable, the communication-during-discharge type portable multi-use power storage device 1 of the present teaching can be used for the external power consuming device 100 having such a charging system. In other words, the applications of the communication-during-discharge type portable multi-use power storage device 1 can be further extended.

When the power management unit 10 manages the power storage device main body 2 based on a monitoring result of the charge of the power storage device main body 2, the versatility regarding the management of the power storage device main body 2 is improved. As a result, the applications of the communication-during-discharge type portable multi-use power storage device 1 can be further extended.

### <Modifications of Embodiment of Present Teaching>

The present teaching is not limited to the above-described embodiment and its specific example, and various changes can be made within the scope of the claims. The following describes modifications of the embodiment of the present teaching. The embodiment and the specific example of the embodiment described above and the below-described modifications may be used in combination as needed.

### (Modifications Regarding Operation of Monitoring Unit)

In the present teaching, the monitoring unit may monitor only one of the input of a current to the power storage device main body and an amount of electric power stored in the power storage device main body. The monitoring unit can monitor at least the discharge from the power storage device main body to the external power consuming device. In the present teaching, the monitoring unit may monitor only one of the output of a current from the power storage device main body and an amount of electric power stored in the power storage device main body. The monitoring unit is able to monitor at least the charge of the power storage device main body. In the present teaching, the monitoring unit may monitor only one of the input of a current to the power storage device main body and the output of a current from the power storage device main body.

### (Modifications Regarding Power Management Unit)

In the present teaching, the power management unit may be formed only of hardware. Alternatively, the power management unit may be formed of a functional unit which is partially hardware and partially embodied by the execution of a program. Likewise, the monitoring unit may be formed only of hardware, or may be partially hardware and partially a functional unit embodied by the execution of a program. Likewise, the communication-during-discharge control unit may be formed only of hardware, or may be partially hardware and partially a functional unit embodied by the execution of a program.

### (Modifications Regarding Terminal Portion)

In the specific example of the embodiment above, the terminal portion 5 is formed of a pair of electrode terminals. Alternatively, the terminal portion of the present teaching may include a pair of electrode terminals for discharge and a pair of electrode terminals for charge. According to this configuration, when a pair of electrode terminals for charge is used, a power source is able to directly supply electric power to the communication-during-discharge type portable multi-use power storage device, without the intermediary of the external power consuming device. On this account, depending on the arrangement and use of the external power consuming device and the arrangement of the power source, it is possible to simultaneously perform the charge and discharge of the communication-during-discharge type portable multi-use power storage device.

### (Modifications Regarding of Charging System)

The communication-during-discharge type portable multi-use power storage device of the present teaching may be chargeable only when the apparatus is attached to the external power consuming device. In other words, there may be no power supply device corresponding to the communication-during-discharge type portable multi-use power storage device, and the communication-during-discharge type portable multi-use power storage device may be chargeable only by a power source.

The communication-during-discharge type portable multi-use power storage device of the present teaching may be chargeable only by the power supply device. In other words, the external power consuming device and the communication-during-discharge type portable multi-use power storage device may not be chargeable when the communication-during-discharge type portable multi-use power storage device is attached to the external power consuming device.

### (Modifications Regarding power storage device)

The communication-during-discharge type portable multi-use power storage device of the present teaching may include an imaging apparatus which is configured to take at least one of photographs or moving images. The imaging apparatus may be a monocular camera or a compound-eye camera. The imaging apparatus may be a visible light camera or an infrared camera. The communication-during-discharge type portable multi-use power storage device of the present teaching may include a display such as a liquid crystal display screen. The communication-during-discharge type portable multi-use power storage device of the present teaching may include an audio output apparatus. A monitoring result by the monitoring unit may be at least partially displayed on the display. The use environment information related to the use environment of the power storage device main body may be at least partially displayed on the display. The outside information that the wireless communication unit receives from the external communication device may be at least partially displayed on the display. The communication-during-discharge type portable multi-use power storage device of the present teaching may have other functions that a multifunction mobile phone called smartphone has.

### (Modifications Regarding Use of power storage device)

In the present teaching, the number of communication-during-discharge type portable multi-use power storage devices attachable and detachable to and from one external power consuming device may be one or more than one. The number of the communication-during-discharge type portable multi-use power storage devices attachable and detachable to and from one external power consuming device is determined based on the electrical capacity of the communication-during-discharge type portable multi-use power storage device, the functions of the external power consuming device, etc.

The external power consuming devices of plural types of the present teaching may be different in the number of the communication-during-discharge type portable multi-use power storage devices attachable and detachable to and from the same. For example, the number of the communication-during-discharge type portable multi-use power storage devices attachable and detachable to and from a first external power consuming device among the external power consuming devices of plural types may be one, whereas the number of the communication-during-discharge type portable multi-use power storage devices attachable and detachable to and from a second external power consuming device among the external power consuming devices of plural types may be more than one.

In the present teaching, when a plurality of communication-during-discharge type portable multi-use power storage devices are attachable and detachable to and from one external power consuming device, the communication-during-discharge type portable multi-use power storage devices may be electrically connected in series or in parallel. The connection state may be a combination of series connection and parallel connection.

In the specific example of the embodiment above, the orientation of the communication-during-discharge type portable multi-use power storage device when the communication-during-discharge type portable multi-use power storage device 1 is carried by using the handle 4a is different from the orientation of the communication-during-discharge type portable multi-use power storage device 1 when the detachable casing 4 is attached to the external power consuming device 100 (see FIG. 1). In the present teaching, however, the orientation of the communication-during-discharge type portable multi-use power storage device when the communication-during-discharge type portable multi-use power storage device is carried by using the handle may be identical to or different from the orientation of the communication-during-discharge type portable multi-use power storage device when the detachable casing is attached to the external power consuming device.

### (Modifications Regarding Use Environment Information)

In the present teaching, the use environment information may not include information related to the location of the power storage device main body. The use environment information may not include information related to the posture of the power storage device main body. The use environment information may not include information related to the speed of movement of the power storage device main body. The use environment information may not include information related to the acceleration of movement of the power storage device main body. The use environment information may not include information related to a pressure that the power storage device main body receives.

### (Modifications Regarding Information Sent and Received between power storage device and External Communication Device)

In the specific example of the embodiment above, the external communication device 200 sends information for managing the power storage device main body 2 to the communication-during-discharge type portable multi-use power storage device 1. In this connection, in the present teaching the outside information sent from the external communication device to the communication-during-discharge type portable multi-use power storage device may not include information for managing the power storage device main body.

In the present teaching, the outside information that the communication-during-discharge type portable multi-use power storage device receives from the external communication device may not include information for managing the power storage device main body. In the present teaching, the outside information that the communication-during-discharge type portable multi-use power storage device receives from the external communication device may not include information generated based on the use environment information received by the external communication device.

In the present teaching, the communication-during-discharge type portable multi-use power storage device may not send, to the external communication device, a monitoring result of the power storage device main body by the monitoring unit. In the present teaching, the outside information that the communication-during-discharge type portable multi-use power storage device receives from the external communication device may not include information generated based on a monitoring result of the power storage device main body by the monitoring unit.

A use environment information acquisition unit 1023 of Tokugan 2017-38284 which is a basic application of the subject application is equivalent to an example of the use environment information acquisition unit 13 of the specification of the subject application. A processing unit 102A of the basic application is equivalent to the arithmetic processing device 15 of the specification of the subject application. A step based on information from a management device (step S3) in the basic application is equivalent to the step of receiving the use environment information (step S3) and the step based on the received use environment information (step S4) in the specification of the subject application. A step based on information from an external communication device (step S4) in the basic application is equivalent to a step of receiving an instruction (step S5) and a step based on the received instruction (step S6) in the specification of the subject application.

### [Reference Signs List]

- 1: communication-during-discharge type portable multi-use power storage device
- 2: power storage device main body
- 3: management device
- 4: detachable casing
- 4a: handle
- 5: terminal portion
- 10: power management unit
- 11: monitoring unit
- 12: wireless communication unit
- 13: use environment information acquisition unit
- 14: communication-during-discharge control unit
- 100: external power consuming device
- 200: external communication device

## Claims

1. A communication-during-discharge type portable multi-use power storage device (1) usable for plural types of external power consuming devices, comprising:
a power storage device main body (2) capable of storing electric power;
a management device (3) including a power management unit (10) configured to manage the power storage device main body (2);
a detachable casing (4) which houses the power storage device main body (2) and the management device (3) and is attachable and detachable to and from an external power consuming device (100) consuming the electric power, in order to allow the power storage device main body (2) and the management device (3) to be integrally attachable and detachable to and from the external power consuming device (100), the detachable casing (4) having a handle (4a) which allows the detachable casing (4) to be hand-carried, the detachable casing (4) being attachable and detachable to and from plural types of external power consuming devices (100); and
a terminal portion (5) provided on the detachable casing (4) to be accessible from outside, being electrically connected to the power storage device main body (2), and allowing the electric power to be transmitted between the outside of the detachable casing (4) and the power storage device main body (2), the terminal portion (5) being capable of supplying the electric power stored in the power storage device main body (2) to the external power consuming device (100) attached to the detachable casing (4), irrespective of the type of the external power consuming device (100) attached to the detachable casing (4),
and
in addition to the power management unit (10), the management device (3) further including:
a monitoring unit (11) configured to monitor discharge from the power storage device main body (2) to the external power consuming device (100) attached to the detachable casing (4), irrespective of the type of the external power consuming device (100) attached to the detachable casing (4);
a wireless communication unit (12) capable of sending and receiving information wirelessly while the power storage device main body (2) is discharging to the external power consuming device (100) attached to the detachable casing (4), irrespective of the type of the external power consuming device (100) attached to the detachable casing (4);
a use environment information acquisition unit (13) configured to acquire use environment information related to use environment of the power storage device main body (2) which is discharging to the external power consuming device (100) attached to the detachable casing (4), irrespective of the type of the external power consuming device (100) attached to the detachable casing (4), the use environment information corresponding to the external power consuming device (100) attached to the detachable casing (4), and the use environment information including at least one of information related to a moisture around the power storage device main body (2), information related to an air pressure around the power storage device main body (2), information related to the location of the power storage device main body (2), information related to the posture of the power storage device main body (2), information related to speed of movement of the power storage device main body (2), information related to acceleration of movement of the power storage device main body (2), or information related to a pressure received by the power storage device main body (2); and
a communication-during-discharge control unit (14) configured to cause the wireless communication unit (12) to send, wirelessly, at least part of the use environment information acquired by the use environment information acquisition unit (13) to an external communication device (200) which is located such that the distance between the external communication device (200) and the wireless communication unit (12) is longer than the distance between the external power consuming device (100) attached to the detachable casing (4) and the wireless communication unit (12) and to obtain outside information which is sent from the external communication device (200) and received by the wireless communication unit (12) wirelessly, while the power storage device main body (2) is discharging to the external power consuming device (100) attached to the detachable casing (4) and the monitoring unit (11) indicates that the power storage device main body (2) is discharging, irrespective of the type of the external power consuming device (100) attached to the detachable casing (4), the outside information including information for managing the power storage device main body (2) in accordance with the use environment information received by the external communication device (200), and
the management device (3) further configured to control the discharge from the power storage device main body (2) to the external power consuming device (100) attached to the detachable casing (4) based on the information for managing the power storage device main body (2) received from the external communication device (200).

2. The communication-during-discharge type portable multi-use power storage device (1) according to claim 1, wherein,
the wireless communication unit (12) is capable of communicating with the external communication device (200) by using a mobile phone communication system.

3. The communication-during-discharge type portable multi-use power storage device (1) according to claims 1 or 2, wherein,
the use environment information includes information related to a temperature around the power storage device main body (2).

4. The communication-during-discharge type portable multi-use power storage device (1) according to any one of claims 1 to 3, wherein,
the monitoring unit (11) is configured to monitor the discharge from the power storage device main body (2) to the external power consuming device (100) attached to the detachable casing (4), by monitoring at least one of output of a current from the power storage device main body (2) or an amount of the electric power stored in the power storage device main body (2), irrespective of the type of the external power consuming device (100) attached to the detachable casing (4).

5. The communication-during-discharge type portable multi-use power storage device (1) according to any one of claims 1 to 4, wherein,
the power management unit (10) is configured to manage the power storage device main body (2) based on a monitoring result of the power storage device main body (2) by the monitoring unit (11).

6. The communication-during-discharge type portable multi-use power storage device (1) according to any one of claims 1 to 5, wherein,
the communication-during-discharge control unit (14) is configured to cause the wireless communication unit (12) to send, wirelessly, a monitoring result of the power storage device main body (2) by the monitoring unit (11) to the external communication device (200) while the power storage device main body (2) is discharging to the external power consuming device (100) attached to the detachable casing (4) and the monitoring unit (11) indicates that the power storage device main body (2) is discharging, irrespective of the type of the external power consuming device (100) attached to the detachable casing (4).

7. The communication-during-discharge type portable multi-use power storage device (1) according to claim 6, wherein,
the outside information includes information generated based on the monitoring result of the power storage device main body (2) by the monitoring unit (11).

8. The communication-during-discharge type portable multi-use power storage device (1) according to any one of claims 1 to 7, wherein,
the detachable casing (4) is attachable and detachable to and from a power supply device,
the electric power is supplied from the power supply device to the terminal portion (5) in a state that the detachable casing (4) is attached to the power supply device, and
the power storage device main body (2) is able to store the electric power supplied to the terminal portion (5).

9. The communication-during-discharge type portable multi-use power storage device (1) according to any one of claims 1 to 8, wherein,
when at least one of the types of the external power consuming devices is attached to the detachable casing (4), the electric power is supplied from a power source to the terminal portion (5) while the detachable casing (4) is attached to the external power consuming device (100), and
the power storage device main body (2) is able to store the electric power supplied to the terminal portion (5).

10. The communication-during-discharge type portable multi-use power storage device (1) according to claim 8, wherein,
the monitoring unit (11) is configured to monitor the charge of the power storage device main body (2) by the power supply device by monitoring at least one of input of a current from the power supply device to the power storage device main body (2) or an amount of the electric power stored in the power storage device main body (2).

11. The communication-during-discharge type portable multi-use power storage device (1) according to claim 9, wherein,
the monitoring unit (11) is configured to monitor the charge of the power storage device main body (2) by the power source by monitoring at least one of input of a current from or the power source to the power storage device main body (2) or an amount of the electric power stored in the power storage device main body (2).

## Patentansprüche

1. Eine tragbare Mehrzweck-Leistungsspeichervorrichtung (1) vom Kommunikation-während-Entladung-Typ, die für mehrere Arten von externen leistungsverbrauchenden Vorrichtungen verwendbar ist, mit folgenden Merkmalen:
einem Leistungsspeichervorrichtungshauptkörper (2), der dazu in der Lage ist, elektrische Leistung zu speichern;
einer Verwaltungsvorrichtung (3), die eine Leistungsverwaltungseinheit (10) umfasst, welche dazu konfiguriert ist, den Leistungsspeichervorrichtungshauptkörper (2) zu verwalten;
einem abnehmbaren Gehäuse (4), das den Leistungsspeichervorrichtungshauptkörper (2) und die Verwaltungsvorrichtung (3) beherbergt und das an eine externe leistungsverbrauchende Vorrichtung (100), die die elektrische Leistung verbraucht, anbringbar und von derselben abnehmbar ist, um zu ermöglichen, dass der Leistungsspeichervorrichtungshauptkörper (2) und die Verwaltungsvorrichtung (3) einstückig an der externen leistungsverbrauchenden Vorrichtung (100) anbringbar und von derselben abnehmbar ist, wobei das abnehmbare Gehäuse (4) einen Griff (4a) aufweist, der es ermöglicht, dass das abnehmbare Gehäuse (4) von Hand getragen werden kann, wobei das abnehmbare Gehäuse (4) an mehreren Arten von externen leistungsverbrauchenden Vorrichtungen (100) anbringbar und von diesen abnehmbar ist; und
einem Anschlussabschnitt (5), der in dem abnehmbaren Gehäuse (4) bereitgestellt ist, so dass auf denselben von außen zugegriffen werden kann, wobei derselbe elektrisch mit dem Leistungsspeichervorrichtungshauptkörper (2) verbunden ist und es ermöglicht, dass die elektrische Leistung zwischen der Außenseite des abnehmbaren Gehäuses (4) und dem Leistungsspeichervorrichtungshauptkörper (2) übertragen werden kann, wobei der Anschlussabschnitt (5) dazu in der Lage ist, der externen leistungsverbrauchenden Vorrichtung (100), die an dem abnehmbaren Gehäuse (4) angebracht ist, die elektrische Leistung, die in dem Leistungsspeichervorrichtungshauptkörper (2) gespeichert ist, zuzuführen, unabhängig von der Art der externen leistungsverbrauchenden Vorrichtung (100), die an dem abnehmbaren Gehäuse (4) angebracht ist,
und
wobei die Verwaltungsvorrichtung (3) zusätzlich zu der Leistungsverwaltungseinheit (10) ferner Folgendes umfasst:
eine Überwachungseinheit (11), die dazu konfiguriert ist, eine Entladung aus dem Leistungsspeichervorrichtungshauptkörper (2) zu der externen leistungsverbrauchenden Vorrichtung (100), die an dem abnehmbaren Gehäuse (4) angebracht ist, zu überwachen, unabhängig von der Art der externen leistungsverbrauchenden Vorrichtung (100), die an dem abnehmbaren Gehäuse (4) angebracht ist;
eine Drahtloskommunikationseinheit (12), die dazu in der Lage ist, Informationen auf drahtlose Weise zu senden und zu empfangen, während sich der Leistungsspeichervorrichtungshauptkörper (2) in die externe leistungsverbrauchende Vorrichtung (100) entlädt, die an dem abnehmbaren Gehäuse (4) angebracht ist, unabhängig von der Art der externen leistungsverbrauchenden Vorrichtung (100), die an dem abnehmbaren Gehäuse (4) angebracht ist;
eine Nutzungsumgebungsinformationserfassungseinheit (13), die dazu konfiguriert ist, Nutzungsumgebungsinformationen in Bezug auf eine Nutzungsumgebung des Leistungsspeichervorrichtungshauptkörpers (2) zu erfassen, welcher sich in die externe leistungsverbrauchende Vorrichtung (100) entlädt, die an dem abnehmbaren Gehäuse (4) angebracht ist, unabhängig von der Art der externen leistungsverbrauchenden Vorrichtung (100), die an dem abnehmbaren Gehäuse (4) angebracht ist, wobei die Nutzungsumgebungsinformationen der externen leistungsverbrauchenden Vorrichtung (100) entsprechen, die an dem abnehmbaren Gehäuse (4) angebracht ist, und die Nutzungsumgebungsinformationen eine Information in Bezug auf eine Feuchtigkeit um den Leistungsspeichervorrichtungshauptkörper (2) herum, eine Information in Bezug auf einen Luftdruck um den Leistungsspeichervorrichtungshauptkörper (2) herum, eine Information in Bezug auf den Standort des Leistungsspeichervorrichtungshauptkörpers (2), eine Information in Bezug auf die Haltung des Leistungsspeichervorrichtungshauptkörpers (2), eine Information in Bezug auf eine Bewegungsgeschwindigkeit des Leistungsspeichervorrichtungshauptkörpers (2), eine Information in Bezug auf eine Beschleunigung einer Bewegung des Leistungsspeichervorrichtungshauptkörpers (2) und/oder eine Information in Bezug auf einen Druck, den der Leistungsspeichervorrichtungshauptkörper (2) erfährt, umfassen; und
eine Kommunikation-während-Entladung-Steuereinheit (14), die dazu konfiguriert ist, zu bewirken, dass die Drahtloskommunikationseinheit (12) auf drahtlose Weise zumindest einen Teil der Nutzungsumgebungsinformationen, die von der Nutzungsumgebungsinformationserfassungseinheit (13) erfasst werden, an eine externe Kommunikationsvorrichtung (200) zu senden, die sich derart befindet, dass der Abstand zwischen der externen Kommunikationsvorrichtung (200) und der Drahtloskommunikationseinheit (12) größer ist als der Abstand zwischen der externen leistungsverbrauchenden Vorrichtung (100), die an dem abnehmbaren Gehäuse (4) angebracht ist, und der Drahtloskommunikationseinheit (12), und Außeninformationen zu erhalten, die auf drahtlose Weise von der externen Kommunikationsvorrichtung (200) gesendet und durch die Drahtloskommunikationseinheit (12) empfangen werden, während sich der Leistungsspeichervorrichtungshauptkörper (2) in die externe leistungsverbrauchende Vorrichtung (100) entlädt, die an dem abnehmbaren Gehäuse (4) angebracht ist, und die Überwachungseinheit (11) darauf hinweist, dass der Leistungsspeichervorrichtungshauptkörper (2) sich entlädt, unabhängig von der Art der externen leistungsverbrauchenden Vorrichtung (100), die an dem abnehmbaren Gehäuse (4) angebracht ist, wobei die Außeninformationen Informationen zum Verwalten des Leistungsspeichervorrichtungshauptkörpers (2) gemäß den Nutzungsumgebungsinformationen umfassen, die durch die externe Kommunikationsvorrichtung (200) empfangen werden, und
die Verwaltungsvorrichtung (3) ferner dazu konfiguriert ist, die Entladung aus dem Leistungsspeichervorrichtungshauptkörper (2) in die externe leistungsverbrauchende Vorrichtung (100), die an dem abnehmbaren Gehäuse (4) angebracht ist, auf der Basis der Informationen zum Verwalten des Leistungsspeichervorrichtungshauptkörpers (2), die von der externen Kommunikationsvorrichtung (200) empfangen werden, zu steuern.

2. Die tragbare Mehrzweck-Leistungsspeichervorrichtung (1) vom Kommunikation-während-Entladung-Typ gemäß Anspruch 1, wobei
die Drahtloskommunikationseinheit (12) dazu in der Lage ist, mit der externen Kommunikationsvorrichtung (200) unter Verwendung eines Mobiltelefonkommunikationssystems zu kommunizieren.

3. Die tragbare Mehrzweck-Leistungsspeichervorrichtung (1) vom Kommunikation-während-Entladung-Typ gemäß Anspruch 1 oder 2, wobei
die Nutzungsumgebungsinformationen Informationen bezüglich einer Temperatur um den Leistungsspeichervorrichtungshauptkörper (2) herum umfassen.

4. Die tragbare Mehrzweck-Leistungsspeichervorrichtung (1) vom Kommunikation-während-Entladung-Typ gemäß einem der Ansprüche 1 bis 3, wobei
die Überwachungseinheit (11) dazu konfiguriert ist, die Entladung aus dem Leistungsspeichervorrichtungshauptkörper (2) in die externe ieistungsverbrauchende Vorrichtung (100), die an dem abnehmbaren Gehäuse (4) angebracht ist, zu überwachen durch Überwachen eines Ausganges eines Stromes aus dem Leistungsspeichervorrichtungshauptkörper (2) und/oder eines Betrages der elektrischen Leistung, die in dem Leistungsspeichervorrichtungshauptkörper (2) gespeichert ist, unabhängig von der Art der externen leistungsverbrauchenden Vorrichtung (100), die an dem abnehmbaren Gehäuse (4) angebracht ist.

5. Die tragbare Mehrzweck-Leistungsspeichervorrichtung (1) vom Kommunikation-während-Entladung-Typ gemäß einem der Ansprüche 1 bis 4, wobei
die Leistungsverwaltungseinheit (10) dazu konfiguriert ist, den Leistungsspeichervorrichtungshauptkörper (2) auf der Basis eines Überwachungsergebnisses des Leistungsspeichervorrichtungshauptkörpers (2) durch die Überwachungseinheit (11) zu verwalten.

6. Die tragbare Mehrzweck-Leistungsspeichervorrichtung (1) vom Kommunikation-während-Entladung-Typ gemäß einem der Ansprüche 1 bis 5, wobei
die Kommunikation-während-Entladung-Steuereinheit (14) dazu konfiguriert ist, zu bewirken, dass die Drahtloskommunikationseinheit (12) auf drahtlose Weise ein Überwachungsergebnis des Leistungsspeichervorrichtungshauptkörpers (2) durch die Überwachungseinheit (11) an die externe Kommunikationsvorrichtung (200) sendet, während sich der Leistungsspeichervorrichtungshauptkörper (2) in die externe leistungsverbrauchende Vorrichtung (100) entlädt, die an dem abnehmbaren Gehäuse (4) angebracht ist, und die Überwachungseinheit (11) darauf hinweist, dass der Leistungsspeichervorrichtungshauptkörper (2) sich entlädt, unabhängig von der Art der externen leistungsverbrauchenden Vorrichtung (100), die an dem abnehmbaren Gehäuse (4) angebracht ist.

7. Die tragbare Mehrzweck-Leistungsspeichervorrichtung (1) vom Kommunikation-während-Entladung-Typ gemäß Anspruch 6, wobei
die Außeninformationen Informationen umfassen, die auf der Basis des Überwachungsergebnisses des Leistungsspeichervorrichtungshauptkörpers (2) durch die Überwachungseinheit (11) erzeugt werden.

8. Die tragbare Mehrzweck-Leistungsspeichervorrichtung (1) vom Kommunikation-während-Entladung-Typ gemäß einem der Ansprüche 1 bis 7, wobei
das abnehmbare Gehäuse (4) an einer Leistungszufuhrvorrichtung anbringbar und von derselben abnehmbar ist,
die elektrische Leistung, die aus der Leistungszufuhrvorrichtung an den Anschlussabschnitt (5) in einem Zustand zugeführt wird, in dem das abnehmbare Gehäuse (4) an der Leistungszufuhrvorrichtung angebracht ist, und
der Leistungsspeichervorrichtungshauptkörper (2) dazu in der Lage ist, die dem Anschlussabschnitt (5) zugeführte elektrische Leistung zu speichern.

9. Die tragbare Mehrzweck-Leistungsspeichervorrichtung (1) vom Kommunikation-während-Entladung-Typ gemäß einem der Ansprüche 1 bis 8, wobei
dann, wenn zumindest eine der Arten der externen leistungsverbrauchenden Vorrichtungen an dem abnehmbaren Gehäuse (4) angebracht ist, dem Anschlussabschnitt (5) die elektrische Leistung aus einer Leistungsquelle zugeführt wird, während das abnehmbare Gehäuse (4) an der externen leistungsverbrauchenden Vorrichtung (100) angebracht ist, und
der Leistungsspeichervorrichtungshauptkörper (2) dazu in der Lage ist, die dem Anschlussabschnitt (5) zugeführte elektrische Leistung zu speichern.

10. Die tragbare Mehrzweck-Leistungsspeichervorrichtung (1) vom Kommunikation-während-Entladung-Typ gemäß Anspruch 8, wobei
die Überwachungseinheit (11) dazu konfiguriert ist, die Ladung des Leistungsspeichervorrichtungshauptkörpers (2) durch die Leistungszufuhrvorrichtung zu überwachen durch Überwachen eines Einganges eines Stromes aus der Leistungszufuhrvorrichtung in den Leistungsspeichervorrichtungshauptkörper (2) und/oder eines Betrages der elektrischen Leistung, die in dem Leistungsspeichervorrichtungshauptkörper (2) gespeichert ist.

11. Die tragbare Mehrzweck-Leistungsspeichervorrichtung (1) vom Kommunikation-während-Entladung-Typ gemäß Anspruch 9, wobei
die Überwachungseinheit (11) dazu konfiguriert ist, die Ladung des Leistungsspeichervorrichtungshauptkörpers (2) durch die Leistungsquelle zu überwachen durch Überwachen eines Eingangs eines Stromes aus der Leistungsquelle in den Leistungsspeichervorrichtungshauptkörper (2) und/oder eines Betrages der elektrischen Leistung, die in dem Leistungsspeichervorrichtungshauptkörper (2) gespeichert ist.

## Revendications

1. Dispositif de stockage d'énergie portable à usages multiples de type à communication pendant la décharge (1) utilisable pour plusieurs types de dispositifs de consommation d'énergie externes, comprenant:
un corps principal de dispositif de stockage d'énergie (2) à même de stocker de l'énergie électrique;
un dispositif de gestion (3) comportant une unité de gestion d'énergie (10) configurée pour gérer le corps principal de dispositif de stockage d'énergie (2);
un boîtier pouvant être séparé (4) qui abrite le corps principal de dispositif de stockage d'énergie (2) et le dispositif de gestion (3) et qui peut être fixé et à et séparé d'un dispositif de consommation d'énergie externe (100) consommant l'énergie électrique, pour permettre au corps principal de dispositif de stockage d'énergie (2) et au dispositif de gestion (3) de pouvoir être fixés de manière solidaire au et être séparés du dispositif de consommation d'énergie externe (100), le boîtier pouvant être séparé (4) présentant une poignée (4a) qui permet au boîtier pouvant être séparé (4) d'être porté à la main, le boîtier pouvant être séparé (4) pouvant être fixé à et séparé de plusieurs types de dispositifs de consommation d'énergie externes (100); et
une partie de bornes (5) prévue sur le boîtier pouvant être séparé (4) de manière à être accessible de l'extérieur, qui est connectée électriquement au corps principal de dispositif de stockage d'énergie (2), et permettant que l'énergie électrique soit transmise entre l'extérieur du boîtier pouvant être séparé (4) et le corps principal de dispositif de stockage d'énergie (2), la partie de bornes (5) étant à même d'alimenter l'énergie électrique stockée dans le corps principal de dispositif de stockage d'énergie (2) vers le dispositif de consommation d'énergie externe (100) fixé au boîtier pouvant être séparé (4), quel que soit le type de dispositif de consommation d'énergie externe (100) fixé au boîtier pouvant être séparé (4), et
en plus de l'unité de gestion d'énergie (10), le dispositif de gestion (3) comporte par ailleurs:
une unité de surveillance (11) configurée pour surveiller la décharge du corps principal de dispositif de stockage d'énergie (2) vers le dispositif de consommation d'énergie externe (100) fixé au boîtier pouvant être séparé (4), quel que soit le type de dispositif de consommation d'énergie externe (100) fixé au boîtier pouvant être séparé (4);
une unité de communication sans fil (12) à même d'envoyer et de recevoir des informations sans fil tandis que le corps principal de dispositif de stockage d'énergie (2) décharge vers le dispositif de consommation d'énergie externe (100) fixé au boîtier pouvant être séparé (4), quel que soit le type du dispositif de consommation d'énergie externe (100) fixé au boîtier pouvant être séparé (4);
une unité d'acquisition d'informations d'environnement d'utilisation (13) configurée pour acquérir les informations d'environnement d'utilisation relatives à l'environnement d'utilisation du corps principal de dispositif de stockage d'énergie (2) qui décharge vers le dispositif de consommation d'énergie externe (100) fixé au boîtier pouvant être séparé (4), quel que soit le type du dispositif de consommation d'énergie externe (100) fixé au boîtier pouvant être séparé (4), les informations d'environnement d'utilisation correspondant au dispositif de consommation d'énergie externe (100) fixé au boîtier pouvant être séparé (4), et les informations d'environnement d'utilisation comportant au moins unes parmi les informations relatives à une humidité autour du corps principal de dispositif de stockage d'énergie (2), les informations relatives à une pression d'air autour du corps principal de dispositif de stockage d'énergie (2), les informations relatives à l'emplacement du corps principal de dispositif de stockage d'énergie (2), les informations relatives à la position du corps principal de dispositif de stockage d'énergie (2), les informations relatives à la vitesse de déplacement du corps principal de dispositif de stockage d'énergie (2), les informations relatives à l'accélération de déplacement du corps principal de dispositif de stockage d'énergie (2), ou les informations relatives à une pression reçue par le corps principal de dispositif de stockage d'énergie (2); et
une unité de commande de communication pendant la décharge (14) configurée pour amener l'unité de communication sans fil (12) à envoyer, sans fil, au moins une partie des informations d'environnement d'utilisation acquises par l'unité d'acquisition d'informations d'environnement d'utilisation (13) à un dispositif de communication externe (200) qui est situé de sorte que la distance entre le dispositif de communication externe (200) et l'unité de communication sans fil (12) soit plus longue que la distance entre le dispositif de consommation d'énergie externe (100) fixé au boîtier pouvant être séparé (4) et l'unité de communication sans fil (12) et pour obtenir les informations de l'extérieur qui sont envoyées depuis le dispositif de communication externe (200) et sont reçues par l'unité de communication sans fil (12), sans fil, tandis que le corps principal de dispositif de stockage d'énergie (2) décharge vers le dispositif de consommation d'énergie externe (100) fixé au boîtier pouvant être séparé (4) et que l'unité de surveillance (11) indique que le corps principal de dispositif de stockage d'énergie (2) décharge, quel que soit le type du dispositif de consommation d'énergie externe (100) fixé au boîtier pouvant être séparé (4), les informations de extérieur comportant les informations destinées à gérer le corps principal de dispositif de stockage d'énergie (2) selon les informations d'environnement d'utilisation reçues par le dispositif de communication externe (200), et
le dispositif de gestion (3) étant configuré par ailleurs pour commander la décharge du corps principal de dispositif de stockage d'énergie (2) vers le dispositif de consommation d'énergie externe (100) fixé au boîtier pouvant être séparé (4) sur base des informations destinées à gérer le corps principal de dispositif de stockage d'énergie (2) reçues du dispositif de communication externe (200).

2. Dispositif de stockage d'énergie portable à usages multiples de type à communication pendant la décharge (1) selon la revendication 1, dans lequel
l'unité de communication sans fil (12) est à même de communiquer avec le dispositif de communication externe (200) à l'aide d'un système de communication par téléphone mobile.

3. Dispositif de stockage d'énergie portable à usages multiples de type à communication pendant la décharge (1) selon les revendications 1 ou 2, dans lequel
les informations d'environnement d'utilisation comportent les informations relatives à une température autour du corps principal de dispositif de stockage d'énergie (2).

4. Dispositif de stockage d'énergie portable à usages multiples de type à communication pendant la décharge (1) selon l'une quelconque des revendications 1 à 3, dans lequel
l'unité de surveillance (11) est configurée pour surveiller la décharge du corps principal de dispositif de stockage d'énergie (2) vers le dispositif de consommation d'énergie externe (100) fixé au boîtier pouvant être séparé (4) en surveillant au moins une parmi la sortie d'un courant du corps principal de dispositif de stockage d'énergie (2) ou une quantité de l'énergie électrique stockée dans le corps principal de dispositif de stockage d'énergie (2), quel que soit le type de dispositif de consommation d'énergie externe (100) fixé au boîtier pouvant être séparé (4).

5. Dispositif de stockage d'énergie portable à usages multiples de type à communication pendant la décharge (1) selon l'une quelconque des revendications 1 à 4, dans lequel
l'unité de gestion d'énergie (10) est configurée pour gérer le corps principal de dispositif de stockage d'énergie (2) sur base d'un résultat de surveillance du corps principal de dispositif de stockage d'énergie (2) par l'unité de surveillance (11).

6. Dispositif de stockage d'énergie portable à usages multiples de type à communication pendant la décharge (1) selon l'une quelconque des revendications 1 à 5, dans lequel
l'unité de commande de communication pendant la décharge (14) est configurée pour amener l'unité de communication sans fil (12) à envoyer, sans fil, un résultat de surveillance du corps principal de dispositif de stockage d'énergie (2) par l'unité de surveillance (11) au dispositif de communication externe (200) tandis que le corps principal de dispositif de stockage d'énergie (2) décharge vers le dispositif de consommation d'énergie externe (100) fixé au boîtier pouvant être séparé (4) et que l'unité de surveillance (11) indique que le corps principal de dispositif de stockage d'énergie (2) décharge, quel que soit le type de dispositif de consommation d'énergie externe (100) fixé au boîtier pouvant être séparé (4).

7. Dispositif de stockage d'énergie portable à usages multiples de type à communication pendant la décharge (1) selon la revendication 6, dans lequel
les informations de l'extérieur comportent les informations générées sur base du résultat de la surveillance du corps principal de dispositif de stockage d'énergie (2) par l'unité de surveillance (11).

8. Dispositif de stockage d'énergie portable à usages multiples de type à communication pendant la décharge (1) selon l'une quelconque des revendications 1 à 7, dans lequel
le boîtier pouvant être séparé (4) peut être fixé à et séparé d'un dispositif d'alimentation d'énergie,
l'énergie électrique est alimentée du dispositif d'alimentation d'énergie à la partie de bornes (5) dans un état dans lequel le boîtier pouvant être séparé (4) est fixé au dispositif d'alimentation d'énergie, et
le corps principal (2) de dispositif de stockage d'énergie est à même de stocker l'énergie électrique alimentée vers la partie de bornes (5).

9. Dispositif de stockage d'énergie portable à usages multiples de type à communication pendant la décharge (1) selon l'une quelconque des revendications 1 à 8, dans lequel
lorsqu'au moins un des types de dispositifs de consommation d'énergie externes est fixé au boîtier pouvant être séparé (4), l'énergie électrique est alimentée d'une source d'énergie vers la partie de bornes (5) tandis que le boîtier pouvant être séparé (4) est fixé au dispositif de consommation d'énergie externe (100), et
le corps principal de dispositif de stockage d'énergie (2) est à même de stocker l'énergie électrique alimentée vers la partie de bornes (5).

10. Dispositif de stockage d'énergie portable à usages multiples de type à communication pendant la décharge (1) selon la revendication 8, dans lequel
l'unité de surveillance (11) est configurée pour surveiller la charge du corps principal de dispositif de stockage d'énergie (2) par le dispositif d'alimentation d'énergie en surveillant au moins une parmi l'entrée d'un courant du dispositif d'alimentation d'énergie vers le corps principal de dispositif de stockage d'énergie (2) ou une quantité de l'énergie électrique stockée dans le corps principal de dispositif de stockage d'énergie (2).

11. Dispositif de stockage d'énergie portable à usages multiples (1) de type à communication pendant la décharge selon la revendication 9, dans lequel
l'unité de surveillance (11) est configurée pour surveiller la charge du corps principal de dispositif de stockage d'énergie (2) par la source d'énergie en surveillant au moins une parmi l'entrée d'un courant de la source de courant vers le corps principal de dispositif de stockage d'énergie (2) ou une quantité d'énergie électrique stockée dans le corps principal de dispositif de stockage d'énergie (2).
